# EUROPEAN PATENT SPECIFICATION

(11) **EP 2 991 238 B1**
(45) Date of publication and mention of the grant of the patent: **23.11.2022**
(21) Application number: 13883255.5
(22) Date of filing: 25.04.2013
(51) Int. Cl.: H04L 5/00, H04L 5/14

(54) **METHOD AND DEVICE FOR TRANSMITTING SIGNAL**
SIGNALÜBERTRAGUNGSVORRICHTUNG UND -VERFAHREN
PROCÉDÉ ET DISPOSITIF DE TRANSMISSION DE SIGNAL

(43) Date of publication of application: 02.03.2016
(73) Proprietor: Huawei Technologies Co., Ltd., Longgang District Shenzhen, Guangdong 518129 (CN)
(72) Inventor: ZHOU, Mingyu, Shenzhen Guangdong 518129 (CN); WAN, Lei, Shenzhen Guangdong 518129 (CN)
(74) Representative: Epping - Hermann - Fischer
(86) International application number: PCT/CN2013/074703
(87) International publication number: WO 2014/172868

(56) References cited:
- CN-A- 101 877 688
- CN-A- 102 647 790
- CN-A- 102 783 050
- US-A1- 2009 131 110
- US-A1- 2011 096 783
- US-A1- 2011 235 682
- US-A1- 2012 008 522
- US-A1- 2012 263 117

## Description

### TECHNICAL FIELD

Embodiments of the present invention relate to a communications system, and in particular, to a signal transmission method and device.

### BACKGROUND

User equipment generally transmits a wireless signal with a network device in a wireless manner, sending of a wireless signal from the user equipment to the network device is called uplink transmission, and sending of a wireless signal from the network device to the user equipment is called downlink transmission.

Generally, the uplink transmission and the downlink transmission are designed separately, thereby ensuring that the uplink and the downlink meet technical requirements separately. For example, in an existing LTE system, the uplink transmission adopts a single-carrier frequency division multiple access (Single-carrier Frequency-Division Multiple Access, SC-FDMA) manner, and the downlink transmission adopts an orthogonal frequency division multiple access (Orthogonal Frequency Division Multiple Access, OFDMA) manner.

After the system completes configuration of an uplink transmission period and a downlink transmission period, the user equipment can send an uplink signal only in the configured uplink transmission period, and the network device can send a downlink signal only in the configured downlink transmission period; in this case, the user equipment and the network device cannot transmit signals in required periods flexibly. In addition, with increasing demands of people for communication and an increasing shortage of wireless spectrum resources, transmission efficiency of the communications system needs to be further improved.

US 20120263117 A1 discloses a method of scheduling to avoid the desensing. The method includes receiving a first control channel or control region in a first subframe as a part of wireless communication between a user equipment and a network equipment using a first type of radio access technology. The first control channel or control region and the subframe have a first transmission bandwidth configuration, and the control channel or control region includes a grant for scheduling resources in a second subframe that uses a second type of radio access technology. The method also includes receiving a second control channel or control region in the second subframe transmitted between the user equipment and the network equipment using a second type of radio access technology wherein the second control channel or control region in the subframe has a second frequency span which is configured according to the grant in the first transmission bandwidth configuration. US 2009/131110 A1 (BALACHANDRAN KUMAR [US] ET AL) 21 May 2009 (2009-05-21) discloses a frame handler arranged to process differing portions of the frames according to respective differing multiple access technologies e.g. single carrier frequency division multiple access (SC-FDMA). The handler modulates differing downlink portions and demodulates differing uplink portions of the frame based on respective access technologies.

### SUMMARY

The invention is defined in the claims. Embodiments of the present invention provide a signal transmission method and device, which can perform uplink and downlink transmission flexibly, and improve transmission efficiency of a communications system.

A first aspect provides a signal transmission method according to claim 1.

Further, a signal transmission device according to claim 7 and a computer program product according to claim 13 are provided.

According to the embodiments of the present invention, a first device may send a first signal by using a first subcarrier-frequency mapping manner in a first period, and send a second signal by using a second subcarrier-frequency mapping manner in a second period. The first device may send a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

### BRIEF DESCRIPTION OF DRAWINGS

FIG. 1 is a schematic diagram of subcarrier-frequency mapping manners of uplink transmission and downlink transmission;
FIG. 2 is a schematic flowchart of a signal transmission method according to an embodiment of the present invention;
FIG. 3A is a schematic diagram of subframe configuration of a radio subframe according to an embodiment of the present invention;
FIG. 3B is a schematic diagram of resource element-subcarrier mapping according to an embodiment of the present invention;
FIG. 4 is a schematic flowchart of a signal transmission method according to another embodiment of the present invention;
FIG. 5 is a schematic flowchart of a signal transmission method according to another embodiment of the present invention;
FIG. 6 is a schematic flowchart of a signal transmission scenario according to an embodiment of the present invention;
FIG. 7 is a schematic flowchart of a signal transmission scenario according to another embodiment of the present invention;
FIG. 8 is a schematic flowchart of a signal transmission scenario according to an embodiment of the present invention;
FIG. 9 is a schematic flowchart of a signal transmission scenario according to an embodiment of the present invention;
FIG. 10 is a schematic flowchart of a signal transmission scenario according to an embodiment of the present invention;
FIG. 11 is a schematic structural block diagram of a signal transmission device according to an embodiment of the present invention;
FIG. 12 is a schematic structural block diagram of a signal transmission device according to another embodiment of the present invention;
FIG. 13 is a schematic structural block diagram of a signal transmission device according to another embodiment of the present invention;
FIG. 14 is a schematic structural block diagram of a signal transmission device according to another embodiment of the present invention;
FIG. 15 is a schematic structural block diagram of a signal transmission device according to another embodiment of the present invention; and
FIG. 16 is a schematic structural block diagram of a signal transmission device according to another embodiment of the present invention.

### DESCRIPTION OF EMBODIMENTS

The following clearly and completely describes the technical solutions in the embodiments of the present invention with reference to the accompanying drawings in the embodiments of the present invention.

It should be understood that, the technical solutions of the present invention may be applied to various communications systems, such as a GSM (Global System of Mobile communication, Global System for Mobile Communications) system, a CDMA (Code Division Multiple Access, Code Division Multiple Access) system, a WCDMA (Wideband Code Division Multiple Access, Wideband Code Division Multiple Access) system, a GPRS (General Packet Radio Service, general packet radio service) system, an LTE (Long Term Evolution, Long Term Evolution) system, an LTE-A (Advanced long term evolution, Long Term Evolution Advanced) system, and a UMTS (Universal Mobile Telecommunications System, Universal Mobile Telecommunications System), which are not limited in the embodiments of the present invention. However, for ease of description, the embodiments of the present invention are described by using an LTE network as an example.

The embodiments of the present invention may be used in radio networks with different standards. A radio access network may include different network elements in different systems.

For example, network elements on the radio access network in the LTE and LTE-A include an eNB (eNodeB, evolved NodeB), and network elements on the radio access network in the WCDMA include an RNC (Radio Network Controller, radio network controller) and a NodeB.

Similarly, other radio networks such as the WiMAX (Worldwide Interoperability for Microwave Access, Worldwide Interoperability for Microwave Access) may also use solutions similar to those in the embodiments of the present invention, and the only difference is that the related modules in the base station system may be different. No limitation is set by the embodiments of the present invention. However, for ease of description, the following embodiments are described by using an eNodeB as an example.

It should also be understood that in the embodiments of the present invention, user equipment (UE, User Equipment) includes, but is not limited to, a mobile station (MS, Mobile Station), a mobile terminal (Mobile Terminal), a mobile telephone (Mobile Telephone), a handset (handset), and portable equipment (portable equipment). The user equipment may communicate with one or more core networks by using a radio access network (RAN, Radio Access Network). For example, the user equipment may be a mobile telephone (or referred to as a "cellular" phone), a computer having a wireless communication function, or the like, and the user equipment may also be a portable, pocket-sized, handheld, computer built-in, or vehicle-mounted mobile apparatus or device.

The present invention is applicable to any wireless communications system, and especially applicable to a flexible duplex (Flexible Duplex) communications system, and relates to a transmit apparatus or receive apparatus that corresponds to service adaptation, interference adaptation, and resource adaptation, and the like, and that is time-varying and in different uplink and downlink directions or is duplex, that is, the related apparatus can change allocation of uplink and downlink resources accordingly with changes of service conditions, interference conditions, and resource use conditions and the like, where the uplink and downlink resources include time resources and/or frequency resources.

In the LTE system, uplink transmission and downlink transmission use a multi-carrier transmission manner. For example, user equipment or a network device first perform channel encoding and modulation on a data bit of a signal to be sent, then maps the data bit into a subcarrier by means of an inverse discrete Fourier transform (Inverse Discrete Fourier Transform, IDFT) operation, and finally adds a cyclic prefix (Cyclic Prefix, CP) and sends the data bit.

A subcarrier mapping process is a process in which a sender places a signal flow, which is generated by means of channel encoding and modulation, on a corresponding subcarrier (for example, places an i^{th} signal on an (i+10)^{th} subcarrier) according to a mapping manner. A signal receiving process is reverse, that is, after removing the CP, a receiver obtains the signal flow on the corresponding subcarrier according to a mapping manner corresponding to the sender, that is, performs a reverse mapping operation (for example, obtains the i^{th} signal from the (i+10)^{th} subcarrier), which is not described herein any further.

A signal received by the receiver is superposition of a waveform and a direct current level, which have different frequencies. The direct current level has quite high energy. If a frequency corresponding to the direct current level is used to send a wanted signal, the wanted signal may be subject to great interference of the direct current level; therefore, the frequency corresponding to the direct current level is not used to transmit the wanted signal, where the frequency is a middlemost frequency of a system bandwidth and is hereinafter referred to as a direct current (Direct Current, DC) frequency.

A frequency (a frequency channel number) corresponding to each subcarrier in uplink transmission is different from a frequency corresponding to each subcarrier in downlink transmission, or misplacement exists. In other words, a subcarrier-frequency mapping manner (or correspondence) in the uplink transmission is different from a subcarrier-frequency mapping manner in the downlink transmission. During the uplink transmission, sending of a signal by user equipment is limited by a requirement that a peak to average power ratio (Peak to Average Power Ratio, PAPR) should not be excessively high; therefore, a single-carrier frequency division multiple access (Single-carrier Frequency-Division Multiple Access, SC-FDMA) manner is used to send an uplink signal, and the signal is required to be consecutive in a frequency domain, that is, the signal must be mapped into subcarriers having consecutive frequencies. During the downlink transmission, sending of a signal by a network device is not limited by the PAPR; therefore, the network device sends a downlink signal by using a more flexible orthogonal frequency division multiple access (orthogonal frequency division multiple access, OFDMA) manner, and the signal is not required to be consecutive in a frequency domain.

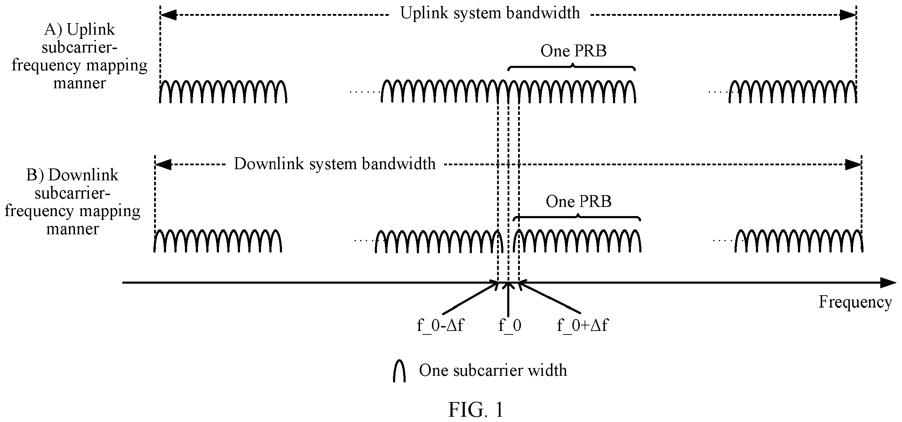

FIG. 1 is a schematic diagram of subcarrier-frequency mapping manners of uplink transmission and downlink transmission. As shown in FIG. 1, a middle point of a grid represents a frequency (or a frequency channel number) of a subcarrier, where the middlemost frequency (that is, DC frequency) of a system bandwidth is f_0, and a subcarrier interval is Δf. For the uplink transmission, frequencies of the subcarriers are separately f_0±1/2Δf, f_0±3/2Δf, f_0±5/2Δf, ...; for the downlink transmission, frequencies of the subcarriers are separately f_0±Δf, f_0±2Δf, f_0±3Δf, .... In other words, an uplink subcarrier-frequency mapping manner shown in FIG. 1 ensures that there is at least 1/2 of a subcarrier width between the frequencies of all subcarriers and the middlemost frequency of the system bandwidth, and a downlink subcarrier-frequency mapping manner ensures that there is at least 1 subcarrier width between the frequencies of all subcarriers and the middlemost frequency of the system bandwidth, where a signal in the downlink transmission avoids the DC frequency. In this case, misplacement of one half of a subcarrier exists between the uplink subcarrier-frequency mapping manner and the downlink subcarrier-frequency mapping manner shown in FIG. 1, that is, a frequency mapped from an uplink subcarrier is different from a frequency mapped from a downlink subcarrier. Because misplacement exists between the frequencies of the uplink and downlink subcarriers, when an uplink signal and a downlink signal are sent in same system bandwidth at the same time, inter-carrier interference (Inter-Carrier Interference, ICI) between the uplink signal and the downlink signal is severe.

It should be understood that, for a conventional frequency division duplex (Frequency Division Duplex, FDD) system, system bandwidth of an uplink signal and a downlink signal is different, the above mentioned f_0 of the uplink signal represents the middlemost frequency of an uplink system bandwidth, and the above mentioned f_0 of the downlink signal represents the middlemost frequency of a downlink system bandwidth; for a conventional time division duplex (Time Division Duplex, TDD) system, the system bandwidth of the uplink signal and the downlink signal is the same, and the above mentioned f_0 represents the same frequency for the uplink signal and the downlink signal.

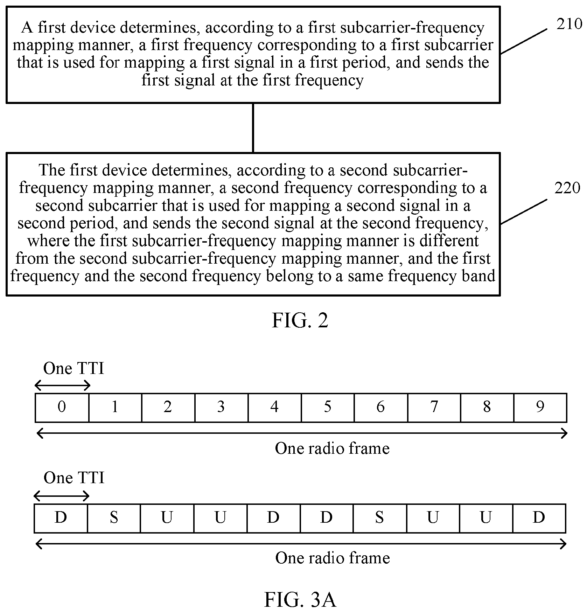

FIG. 2 is a schematic flowchart of a signal transmission method according to an embodiment of the present invention. The method in FIG. 2 may be executed by user equipment or a network device (for example, a base station).

210: A first device determines, according to a first subcarrier-frequency mapping (mapping) manner, a first frequency corresponding to a first subcarrier that is used for mapping a first signal in a first period, and sends the first signal at the first frequency.

220: The first device determines, according to a second subcarrier-frequency mapping manner, a second frequency corresponding to a second subcarrier that is used for mapping a second signal in a second period, and sends the second signal at the second frequency, where the first subcarrier-frequency mapping manner is different from the second subcarrier-frequency mapping manner, and the first frequency and the second frequency belong to a same frequency band.

Either one of the first period and the second period may include at least one orthogonal frequency division multiple access OFDMA symbol or at least one single-carrier frequency division multiple access SC-FDMA symbol or at least one transmission time interval (Transmission Time Interval, TTI), where the length of one TTI is equal to that of one subframe. For example, the first period or the second period may include 14 OFDMA symbols or SC-FDMA symbols. The length of the first period may be the same as that of the second period, and may also be different from that of the second period. For example, the first period and the second period may be one TTI or OFDMA symbol; or the first period may be one TTI, and the second period may be two TTIs; or, the first period is one TTI, and the second period is one OFDMA symbol, which is not limited in this embodiment of the present invention, as long as the first period and the second period are two periods that do not overlap in time.

The first signal and the second signal may include: control signals, for example, signals transmitted on channels such as a physical uplink control channel (Physical Uplink Control Channel, PUCCH), and a physical downlink control channel (Physical Downlink Control Channel, PDCCH) or an enhanced physical downlink control channel (enhanced Physical Downlink Control Channel, ePDCCH); data signals, for example, signals transmitted on channels such as a physical downlink shared channel (Physical Downlink Shared Channel, PDSCH) and a physical uplink shared channel (Physical Uplink Shared Channel, PUSCH); and pilot signals, for example, a channel state information-reference signal (Channel State Information-Reference Signal, CSI-RS) and a sounding reference signal (Sounding Reference Signal, SRS). The first signal and the second signal may be signals of the same type, for example, the first signal and the second signal are both control signals or data signals, and may also be signals of different types, for example, the first signal is a control signal, and the second signal is a data signal, or the first signal is a pilot signal, and the second signal is a data signal.

When user equipment executes the method in FIG. 2, in a same period, a subcarrier-frequency mapping manner used by the user equipment to send an uplink signal may be the same as a subcarrier-frequency mapping manner used by a network side device to send a downlink signal. The user equipment may determine, according to the first subcarrier-frequency mapping manner (for example, the uplink subcarrier-frequency mapping manner shown in FIG. 1), a first frequency corresponding to a first subcarrier that is used for sending an uplink signal in the first period, and send the uplink signal at the first frequency, and determine, according to the second subcarrier-frequency mapping manner (for example, the downlink subcarrier-frequency mapping manner shown in FIG. 1), a second frequency corresponding to a second subcarrier that is used for sending an uplink signal in the second period, and send the uplink signal at the second frequency. Therefore, in the second period, a same subcarrier-frequency mapping manner (for example, the downlink subcarrier-frequency mapping manner shown in FIG. 1) can be used by the user equipment to send the uplink signal and used by the network device to send the downlink signal. In other words, the user equipment and the network device may transmit signals by using the same subcarrier-frequency mapping manner during uplink transmission and downlink transmission in the same period, for example, in a same TTI. This helps to reduce ICI between the uplink signal and the downlink signal, and the uplink signal and the downlink signal can be transmitted in the same period, thereby improving transmission performance of a system, and improving use efficiency of a frequency band.

Generally, there may be more than one subcarrier used for sending a signal and more than one frequency corresponding to the subcarriers. In a TDD system, uplink transmission and downlink transmission have same system bandwidth; therefore, in this embodiment of the present invention, the first frequency and the second frequency belong to the same system bandwidth, that is, belong to the same frequency band.

According to this embodiment of the present invention, the first device may send the first signal by using the first subcarrier-frequency mapping manner in the first period, and send the second signal by using the second subcarrier-frequency mapping manner in the second period. The first device may send a signal by using different subcarrier-frequency mapping manners (for example, the uplink and downlink subcarrier-frequency mapping manners shown in FIG. 1) in different periods; therefore, the first device (for example, user equipment or a network device) can perform uplink transmission or downlink transmission in required periods flexibly, thereby improving transmission performance of a system, and improving use efficiency of a frequency band.

When a network device executes the method in FIG. 2, in a same period, a subcarrier-frequency mapping manner used by the network device to send a downlink signal may be the same as a subcarrier-frequency mapping manner used by user equipment to send an uplink signal. The network device may determine, according to the first subcarrier-frequency mapping manner (for example, the downlink subcarrier-frequency mapping manner shown in FIG. 1), a first frequency corresponding to a first subcarrier that is used for sending a downlink signal in the first period, and determine, according to the second subcarrier-frequency mapping manner (for example, the uplink subcarrier-frequency mapping manner shown in FIG. 1), a first frequency corresponding to a second subcarrier that is used for sending a downlink signal in the second period. Therefore, in the second period, a same subcarrier-frequency mapping manner (for example, the uplink subcarrier-frequency mapping manner shown in FIG. 1) can be used by the user equipment to send the uplink signal and used by the network device to send the downlink signal. In other words, the user equipment and the network device may transmit signals by using the same subcarrier-frequency mapping manner during uplink transmission and downlink transmission in the same period (for example, in a same subframe). This helps to reduce ICI between the uplink signal and the downlink signal, thereby improving transmission performance of a system, and improving use efficiency of a frequency band.

According to this embodiment of the present invention, the first device may transmit signals by using different subcarrier-frequency mapping manners. Therefore, in the same period, during uplink transmission and downlink transmission, the signals can be transmitted by using the same subcarrier-frequency mapping manner, thereby improving transmission performance of a system, and improving use efficiency of a frequency band. In addition, in the same subframe, during uplink transmission and downlink transmission, signals are transmitted by using the same subcarrier-frequency mapping manner, so that a receiver can reduce, by using a scheduling method or an interference cancellation (Interference Cancellation, IC) method, interference between signals received in this subframe.

It should be understood that, the network device may include a base station (Base Station, BS), an access point (Access Point, AP), a remote radio equipment (Remote Radio Equipment, RRE), a remote radio head (Remote Radio Head, RRH), a remote radio unit (Remote Radio Unit, RRU), a relay node (Relay node), and the like. Correspondence between the network device and a cell is not limited and it may be that one network device corresponds to one or more cells and may also be that one cell corresponds to one or more network devices.

Optionally, as another embodiment, the method in FIG. 2 further includes: determining, by the first device according to the second subcarrier-frequency mapping manner, a third frequency corresponding to a third subcarrier that is used for receiving a third signal in a third period, and receiving the third signal at the third frequency.

For example, in the third period, the user equipment may receive, according to the second subcarrier-frequency mapping manner (for example, a downlink subcarrier-frequency mapping manner in an LTE system), a signal sent by a base station, or the base station may receive, according to the second subcarrier-frequency mapping manner (for example, an uplink subcarrier-frequency mapping manner in the LTE system), a signal sent by the user equipment. Similarly, the third period may also include at least one orthogonal frequency division multiple access OFDMA symbol or at least one Single-Carrier Frequency-Division Multiple Access SC-FDMA symbol or at least one transmission time interval TTI. Likewise, the third period does not overlap with the first period or the second period in time.

It should be understood that this embodiment of the present invention does not limit a sequence of the first period, the second period, and the third period. For example, the third period may be between the first period and the second period, and may also be before or after the first period or the second period. According to this embodiment of the present invention, the user equipment or the network device may receive or send signals by using the uplink subcarrier-frequency mapping manner or the downlink subcarrier-frequency mapping manner in the LTE system flexibly according to a service requirement or a scheduling policy, thereby improving transmission performance of a system, and improving use efficiency of a frequency band. According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set.

In other words, that the first frequency set does not overlap with the second frequency set means that misplacement or an offset exists between a frequency of a subcarrier corresponding to the first subcarrier-frequency mapping manner and a frequency of a subcarrier corresponding to the second subcarrier-frequency mapping manner. In addition, a signal is not mapped into a middle subcarrier of the system bandwidth, that is, a signal is not mapped into a DC frequency corresponding to the middle subcarrier.

According to this embodiment of the present invention, the first signal and the second signal are both reference signals; the method in FIG. 2 further includes: determining, by the first device according to a first reference signal-resource element mapping manner, a first resource element corresponding to the first signal in the first period, and determining, according to a second reference signal-resource element mapping manner, a second resource element corresponding to the second signal in the second period; before the sending, by the first device, the first signal at the first frequency, the method in FIG. 2 further includes: mapping, by the first device, the first signal into the first resource element; before the sending, by the first device, the second signal at the second frequency, the method in FIG. 2 further includes: mapping, by the first device, the second signal into the second resource element, where either resource element is uniquely determined by one symbol in a time domain and one subcarrier in a frequency domain.

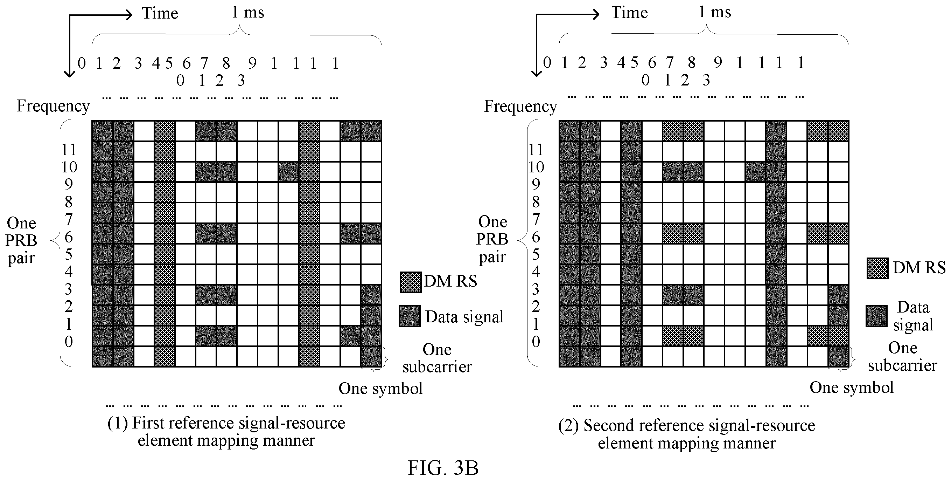

For example, the first device may first map, in the first period according to the first reference signal-resource element mapping manner, the first signal into a subcarrier corresponding to the first subcarrier-frequency mapping manner, and then map the subcarrier corresponding to the first subcarrier-frequency mapping manner into the first frequency according to the first subcarrier-frequency mapping manner, so as to send the first signal at the first frequency; the first device may first map, in the second period according to the second reference signal-resource element mapping manner, the second signal into a subcarrier corresponding to the second subcarrier-frequency mapping manner, and then map the subcarrier corresponding to the second subcarrier-frequency mapping manner into the second frequency according to the second subcarrier-frequency mapping manner, so as to send the second signal at the second frequency. The first device performs, in the third period according to the second reference signal-resource element mapping manner, channel estimation on a received third reference signal corresponding to the second subcarrier-frequency mapping manner. For example, the first device may first receive a signal in the third period according to the second subcarrier-frequency mapping manner, then obtain the third reference signal from a subcarrier corresponding to a resource element that corresponds to the third reference signal and is determined according to the second reference signal-resource element mapping manner, so as to perform the channel estimation on the third reference signal. Resource elements occupied by reference signals of the first reference signal-resource element mapping manner and the second reference signal-resource element mapping manner are different. When the network device configures different senders (for example, the user equipment or another network device) to send signals by using the same reference signal-resource element mapping manner, and allocates different orthogonal reference signal resources to them, for example, allocates different cyclic shift (Cyclic Shift, CS) values or orthogonal cover code (Orthogonal Cover Code, OCC) values in the LTE system, reference signals sent by the senders are orthogonal to each other. By using the foregoing method, different senders may be configured to use the same reference signal-resource element mapping manner in the same period. In this case, the network device can distinguish, by allocating different orthogonal reference signal resources to them, between the reference signals sent by different senders, thereby preventing interference between the reference signals sent by different senders. Referring to FIG. 3B, the UE sends an uplink signal in the first TTI by using the first reference signal-resource element mapping manner shown in (1) of FIG. 3B, receives a downlink signal in the third TTI by using the second reference signal-resource element mapping manner shown in (2) of FIG. 3B, and sends an uplink signal in the second TTI by using the second reference signal-resource element mapping manner shown in (2) of FIG. 3B.

It should be understood that, this embodiment of the present invention does not limit the sequence of a step for determining a resource element and a step for determining a frequency. The step for determining a resource element may occur simultaneously with the step for determining a frequency, and may also occur before or after the step for determining a frequency. It should also be understood that, generally, there may be more than one resource element corresponding to the first signal, and there may be more than one resource element corresponding to the second signal.

According to this embodiment of the present invention, the first signal and the second signal are both control signals; before the sending, by the first device, the first signal at the first frequency, the method in FIG. 2 further includes: mapping, by the first device, the first signal into a subcarrier corresponding to a determined first resource; before the sending, by the first device, the second signal at the second frequency, the method in FIG. 2 further includes: mapping, by the first device, the second signal into a subcarrier corresponding to a determined second resource, where the first resource and the second resource are time-frequency resources or orthogonal code resources, and the first resource is different from the second resource.

The first device may send control signaling by using different resources in the first period and the second period. For example, in the first period, when receiving an uplink signal, a first network device is subject to small interference of a downlink signal sent by a second network device (for example, in the first period, sending power of the second network device is small or the second network device does not send a signal); therefore, the user equipment can send the control signaling by using the first resource. In the second period, when receiving a signal sent by the user equipment, the first network device may be subject to obvious interference of a signal sent by the second network device (the second network device sends a downlink signal in the second period); therefore, in the second period, the user equipment sends the control signaling by using the second resource. Preferably, the second resource is different from a resource used by the second network device to send a signal, or the signal sent by the second network device has small interference on the control signaling that is sent by the user equipment in the second resource, thereby ensuring the performance of the first network device for receiving the control signaling sent by the user equipment. Likewise, information about the second resource may be notified by the second network device or another network device by sending signaling to the user equipment in advance. Here, the resource used for sending the control signaling is not limited, and includes time, a frequency, an orthogonal code resource, and the like.

According to this embodiment of the present invention, in 210, the first device may send the first signal according to first power; in 220, the first device may send the second signal according to second power, where a power deviation exists between the first power and the second power, and the power deviation is preset, or the power deviation is notified to the first device by signaling. For example, the first power and the second power may refer to sending power of a signal. In the first period, the second network device does not send a signal or sends a signal by using low power. In this case, when receiving a signal sent by the first user equipment, the first network device is subject to small interference. Therefore, the first user equipment may determine the sending power by using a first method (for example, calculate the sending power by using a first formula); in the second period, for example, to ensure a signal to interference plus noise ratio (Signal to Interference-plus-Noise Ratio, SINR) of a signal received by the second user equipment, the second network device may increase the sending power. In this case, when receiving the uplink signal sent by the first user equipment, the first network device may be subject to strong interference of a signal sent by the second network device; therefore, the first user equipment can determine the sending power by using a second method (for example, calculate the sending power by using a second formula). A power deviation (or a power offset value) may exist between the power calculated by using the two formulas.

According to this embodiment of the present invention, the power deviation may be a fixed value, or the power deviation may be notified by the network device to the user equipment by using signaling. For example, the power offset value or power offset indication information (for example, 0 represents a rise by 3dB, and 1 represents a rise by 6dB) may be notified by the network device by sending signaling to the user equipment. In this case, the sending power can be adjusted flexibly according to different interference environments.

According to this embodiment of the present invention, the second power is higher than the first power. Specifically, the power deviation may be a positive decibel dB value, for example, 3dB. Sending power of the first user equipment in the second period is relatively high; therefore, receiving performance of the first network device for the signal that is sent by the first user equipment in the second period can be improved.

According to this embodiment of the present invention, the second period may include a TTI, except a TTI used for transmitting a physical broadcast signal and a TTI used for switching downlink transmission to uplink transmission.

For example, the network device may configure uplink and downlink subframe configuration of a radio frame to user equipment by using broadcast signaling. For example, in the uplink and downlink subframe configuration indicated by the broadcast signaling used by the network device, a TTI numbered i may be used for transmitting a downlink signal, and a TTI numbered (i+1) may be used for transmitting an uplink signal. For another example, the TTI numbered i may be used for transmitting a physical broadcast signal. FIG. 3A is a schematic diagram of subframe configuration of a radio subframe according to the embodiment of the present invention.

Referring to FIG. 3A, in the LTE system, a radio frame may include 10 TTIs; in each radio frame, a subframe completely used for downlink transmission is labeled D, a subframe completely used for uplink transmission is labeled U, and a subframe partially used for downlink transmission and partially used for uplink transmission is labeled S. In addition, in the LTE system, the network device may send broadcast signaling to the user equipment to configure a ratio of uplink subframes to downlink subframes, For example, in a configured ratio, subframes numbered 3 and 8 are used for uplink transmission. In a case in which this embodiment of the present invention is not used, the user equipment maps, in all periods (for example, a TTI numbered 2) used for uplink transmission and according to the uplink subcarrier-frequency mapping manner shown in FIG. 1, an uplink signal into the first frequency corresponding to multiple subcarriers, and sends the uplink signal at the first frequency; and obtains, in all periods (for example, a TTI numbered 4) used for downlink transmission and according to the downlink subcarrier-frequency mapping manner, a downlink signal from the second frequency corresponding to multiple subcarriers. The network device may send broadcast signaling to the user equipment, so as to indicate uplink and downlink subframe configuration of a radio frame; for example, subframes numbered 1 and 6 may be used for sending a downlink signal, and the first subframe after the subframes numbered 1 and 6 may be used for sending an uplink signal, that is, the subframes numbered 1 and 6 are S subframes. Because an S subframe is quite important in a time division duplex (Time Division Duplex, TDD) system, strong interference on the signal in the TTI can be prevented when this TTI is not used as the second period in the present invention. In this case, in a radio frame, part or all of the subframes except the subframe numbered S can use the solution in this embodiment of the present invention. Alternatively, TTIs numbered 0 and 5 may be used for transmitting a physical broadcast signal, for example, a signal transmitted on a physical broadcast channel (Physical Broadcast CHannel, PBCH) in the LTE system, and therefore these two TTIs do not use the solution in this embodiment of the present invention either. In this case, interference on a quite important physical broadcast signal can be prevented.

According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

For example, in the second period, a signal that the network device schedules the user equipment to send or receive occupies only a subset of high-frequency band (shown in the upper part of FIG. 1) or low-frequency band (shown in the lower part of FIG. 1) bandwidth of the system bandwidth.

According to this embodiment of the present invention, the first signal and the second signal are sent separately at frequencies corresponding to consecutive subcarriers.

In other words, the network device may schedule the user equipment to use a subset of the low-frequency band bandwidth or the high-frequency band bandwidth of the system bandwidth in FIG. 1 to send or receive a signal. Transmission scheduled by the network device cannot cross a frequency channel number f_0, which helps reuse an original module of the user equipment in this embodiment of the present invention. For example, a signal sent by the user equipment uses a mapping manner of consecutive subcarriers of A) in FIG. 1, and no subcarrier in the middle of the system bandwidth is reserved. In the second period, a signal that the network device schedules the user equipment to send or receive is mapped into frequencies corresponding to the consecutive subcarriers; therefore, if this embodiment of the present invention and the subcarrier-frequency mapping manner B) in FIG. 1 are used in the second period, the subcarriers may also be kept consecutive and no subcarrier in the middle of the system bandwidth is reserved. That is, in the second period, the user equipment maps the signal only into frequencies corresponding to the consecutive subcarriers in the low frequency band or the high frequency band of the system bandwidth; in this case, a module mapping the signal into the consecutive subcarriers in existing user equipment can be reused (reuse), thereby reducing complexity of an upgrade of the existing user equipment.

According to this embodiment of the present invention, the first signal is an OFDMA signal, and the second signal is an SC-FDMA signal; or the second signal is an OFDMA signal, and the first signal is SC-FDMA.

For example, the network device generates and sends an OFDMA signal in the first period and generates and sends an SC-FDMA signal in the second period, while the user equipment also generates and sends an SC-FDMA signal in the second period; or, the user equipment generates and sends an SC-FDMA signal in the first period and generates and sends an OFDMA signal in the second period, while the network device also generates and sends an OFDMA signal in the second period. By using this manner, the user equipment and the network device generate a signal by using a same generation method in the second period, which helps to reduce ICI between signals that are sent simultaneously by the user equipment and the network device. When this method is applied in the LTE system, backward compatibility for the LTE system can also be remained, that is, an earlier-version (for example, using the prior art) user equipment can perform communication according to a routine method in the first period and the third period, while a later-version (for example, using the present invention) user equipment may also use this embodiment of the present invention in the first period and the second period.

According to this embodiment of the present invention, the first device is first user equipment; in 220, the first user equipment sends the second signal to a first network device in the second period, where the second subcarrier-frequency mapping manner is the same as a subcarrier-frequency mapping manner that is used by the first network device to receive, in the second period, a signal sent by a second network device.

For example, the first user equipment may determine, according to the first subcarrier-frequency mapping manner, a first frequency corresponding to a first subcarrier that is used for mapping an uplink signal in a TTI numbered 2, and send the uplink signal to the first network device at the first frequency; determine, according to the second subcarrier-frequency mapping manner, a second frequency corresponding to a second subcarrier that is used for sending an uplink signal in a TTI numbered 4, and send the uplink signal at the second frequency. At the same time, the second network side device may send a signal in the second period by using the second subcarrier-frequency mapping manner, that is, the second subcarrier-frequency mapping manner used by the first user equipment is the same as the subcarrier-frequency mapping manner that is used by the second network device to send the signal in the second period. Because the first network device may receive, by using the same subcarrier-frequency mapping manner, signals sent by the first user equipment and the second network device, a resource scheduling manner or an interference cancellation manner can be used to cancel interference between the signals sent by the first user equipment and the second network device.

Specifically, in a scenario where different network devices perform uplink or downlink transmission by using a same TTI, or in a wireless backhaul (Wireless Backhaul) scenario, in a same period, the user equipment and the network device may send a signal by using the same subcarrier-frequency mapping manner, while another network device may receive, by using the same subcarrier-frequency mapping manner, signals sent by the user equipment and the network device, so that a resource scheduling manner or an interference cancellation manner can be used to cancel interference between the signals sent by the user equipment and the network device, where transmission between the another network device and the network device is called backhaul transmission, and the process in which the another network device receives, by using system bandwidth and a period that are the same as the system bandwidth and period used for receiving a signal sent by the user equipment, a signal sent by the network device is generally called in-band (in-band) wireless backhaul transmission.

According to this embodiment of the present invention, the first device is first user equipment, and the first signal and the second signal are both reference signals; in 220, the first user equipment may send the second signal to the first network device by using a reference signal resource different from a reference signal resource that is used by a second network device to send a reference signal.

The first network device may receive, in different reference signal resources, reference signals sent by the first user equipment and the second network device; therefore, interference between the signals sent by the first user equipment and the second network device can be prevented. According to this embodiment of the present invention, the second subcarrier, or a reference signal resource corresponding to the second signal is preconfigured. For example, the first network device, the second network device, or another random network device may perform the preconfiguration.

If the first device is the first user equipment, in 220, the first user equipment may send the second signal by using a resource preconfigured by the network device; if the first device is the first network device, in 220, the first network device may send the second signal by using a resource preconfigured by another network device, where the preconfigured resource includes a time resource, or a frequency resource, or a reference signal resource.

According to this embodiment of the present invention, the first device is first user equipment; in 220, the first user equipment sends the second signal to second user equipment, where the second subcarrier-frequency mapping manner is the same as a subcarrier-frequency mapping manner that is used by the second user equipment to receive, in the second period, a downlink signal sent by a third network device.

For example, the first user equipment and the second user equipment are devices supporting device to device (Device to Device, D2D) transmission. The first user equipment and the third network device may send a signal by using a same subcarrier-frequency mapping manner in a same subframe, and the second user equipment may receive, by using the same subcarrier-frequency mapping manner, signals sent by the user equipment and the third network device (transmission between the first user equipment and the second user equipment is called D2D transmission), so that a resource scheduling manner or an interference cancellation manner can be used to cancel the interference between the signals sent by the first user equipment and the third network device.

According to this embodiment of the present invention, the first signal and the second signal are both reference signals, and the first user equipment may send the second signal to the second user equipment by using a reference signal resource different from a reference signal resource that is used by the third network device to send a reference signal, where the reference signal resource used by the first user equipment is configured by the third network device.

The second user equipment may receive, in different reference signal resources, reference signals sent by the first user equipment and the third network device; therefore, interference between the signals sent by the first user equipment and the third network device can be prevented. According to this embodiment of the present invention, before the determining, by the first device according to the second subcarrier-frequency mapping manner, the second frequency corresponding to the second subcarrier that is used for mapping the second signal in the second period, the method in FIG. 2 further includes: receiving, by the first device, configuration signaling used for configuring the second period.

If the first device is the first user equipment, the configuration signaling may be sent by the first network device. If the first device is the first network device, the configuration signaling may be sent by the second network device.

For example, the second period may be cyclic, and a network device responsible for configuring the second period may determine or select the second period and send semi-static signaling to user equipment to configure a cycle and/or time offset of the second period. For example, a cycle of the second period is fixedly 10 TTIs, and then the network device only needs to send the time offset of the second period to the user equipment. For example, if the time offset is 3 TTIs, the second period is TTIs numbered 3, 13, 23, ....

According to this embodiment of the present invention, the first device receives, through a physical downlink control channel, the configuration signaling used for configuring the second period.

For example, the configuration signaling may be dynamic signaling carried in a PDCCH, so that the network device dynamically sets a TTI as a second TTI according to service conditions. According to this embodiment of the present invention, the configuration signaling may be dedicated signaling of the first device.

For example, when the first device is the user equipment, the configuration signaling may be specific to the user equipment, that is, the network device notifies configuration of the second TTI by sending the signaling to each user equipment. The network device may send different configuration signaling to different user equipments, so as to indicate that a TTI is the second TTI for user equipment needing to use this embodiment of the present invention and is a first TTI or a third TTI for another user equipment, thereby reducing complexity of the another user equipment.

Optionally, as another embodiment, the method in FIG. 2 further includes: sending, by the user equipment, type indication information to the network device, so that the network device determines, according to the type indication information, whether the first device executes the method in FIG. 2.

Specifically, the type indication information may include interference cancellation capability identifier information of the user equipment or version information of a system supported by the user equipment.

For example, the user equipment may not have an interference cancellation capability; therefore, before sending channel type indication information to the user equipment, the network device needs to determine whether the user equipment has the interference cancellation capability. Specifically, the network device may perform determination by using the interference cancellation capability identifier information that is reported by the user equipment and used for indicating whether the user equipment has the interference cancellation capability, or according to information of the system supported by the user equipment that is reported by a first terminal, where the identifier information may be version information of the system. For example, when the system supported by the user equipment is only LTE R12, it is determined that the user equipment does not have a capability of performing an interference cancellation operation on an uplink signal and a downlink signal; therefore, the user equipment cannot use the method in this embodiment of the present invention. When the operating system of the user equipment supports LTE R13, it is determined that the user equipment has the capability of performing the interference cancellation operation on the uplink signal and the downlink signal; therefore, the user equipment can use the method in this embodiment of the present invention, so as to generate the foregoing beneficial effects.

Optionally, as another embodiment, the method in FIG. 2 may further include that: the first device is user equipment, and the method in FIG. 2 further includes: receiving, by the user equipment, mode configuration information sent by a network device, where the mode configuration information is used for configuring the user equipment to execute the method in FIG. 2.

In other words, the mode configuration information is used for configuring the user equipment to use the method in this embodiment of the present invention. The network device may directly configure the user equipment, so that the user equipment enters a sending mode that is based on a time-varying subcarrier-frequency mapping manner and is described in this embodiment of the present invention, which is convenient for the network device to instruct, according to service load conditions and interference conditions, the user equipment to use the method in this embodiment of the present invention.

Optionally, as another embodiment, the first device is user equipment, and the method in FIG. 2 may further include: receiving, by the user equipment, a cell notification that is sent by a network device in a broadcast manner, where the cell notification is used for notifying that user equipment in a cell corresponding to the network device can execute the method in FIG. 2.

In other words, the network device notifies the user equipment in the broadcast manner that the cell in which the user equipment is located supports this embodiment of the present invention. For example, the network device notifies, in a PBCH signal, that the user equipment uses the method in this embodiment of the present invention, so that the user equipment performs sending or receiving by using the method in this embodiment of the present invention according to the information and by using the foregoing mode configuration information.

This embodiment of the present invention may be applied to a flexible duplex system. By means of this embodiment of the present invention, an uplink signal and a downlink signal may use shared resources, which is different from that in a conventional FDD or TDD system in which relatively fixed different resources (different frequency domain resources or different time domain resources) are allocated to an uplink signal and a downlink signal, thereby supporting the flexible duplex system well.

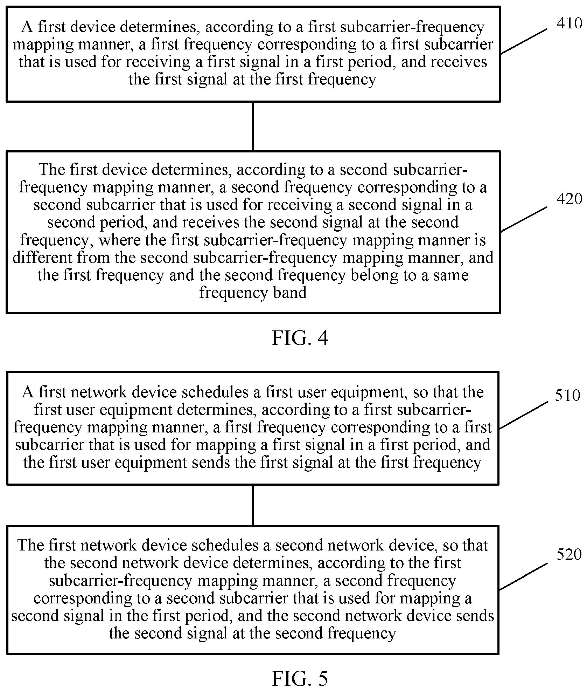

FIG. 4 is a schematic flowchart of a signal transmission method according to another embodiment of the present invention. The method in FIG. 4 is executed by user equipment or a network device. The embodiment of FIG. 4 corresponds to the embodiment of FIG. 2, and detailed descriptions are properly omitted here.

410: A first device determines, according to a first subcarrier-frequency mapping manner, a first frequency corresponding to a first subcarrier that is used for receiving a first signal in a first period, and receives the first signal at the first frequency.

420: The first device determines, according to a second subcarrier-frequency mapping manner, a second frequency corresponding to a second subcarrier that is used for receiving a second signal in a second period, and receives the second signal at the second frequency, where the first subcarrier-frequency mapping manner is different from the second subcarrier-frequency mapping manner, and the first frequency and the second frequency belong to a same frequency band.

According to this embodiment of the present invention, the first device may receive the first signal by using the first subcarrier-frequency mapping manner in the first period, and receive the second signal by using the second subcarrier-frequency mapping manner in the second period. The first device may receive a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

According to this embodiment of the present invention, the method in FIG. 4 further includes: determining, by the first device according to the second subcarrier-frequency mapping manner, a third frequency corresponding to a third subcarrier that is used for mapping a third signal in a third period, and sending the third signal at the third frequency.

According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set.

According to this embodiment of the present invention, the first signal and the second signal are both reference signals; the method in FIG. 4 further includes: determining, by the first device according to a first reference signal-resource element mapping manner, a first resource element corresponding to the first signal in the first period, and determining, according to a second reference signal-resource element mapping manner, a second resource element corresponding to the second signal in the second period; after the receiving, by the first device, the first signal at the first frequency, the method in FIG. 4 further includes: obtaining, by the first device, the first signal from the first resource element; after the receiving, by the first device, the second signal at the second frequency, the method in FIG. 4 further includes: obtaining, by the first device, the second signal from the second resource element, where either resource element is uniquely determined by one symbol in a time domain and one subcarrier in a frequency domain.

According to this embodiment of the present invention, the method in FIG. 4 further includes: before the sending, by the first device, the third signal at the third frequency, determining, by the first device according to the first reference signal-resource element mapping manner, a third resource element corresponding to the third signal in the third period, and mapping the third signal into the third resource element.

According to this embodiment of the present invention, the first signal and the second signal are both control signals; after the receiving the first signal at the first frequency, the method in FIG. 4 further includes: obtaining the first control signal from a subcarrier corresponding to a determined first resource; after the receiving the second signal at the second frequency, the method in FIG. 4 further includes: obtaining the second control signal from a subcarrier corresponding to a determined second resource, where the first resource and the second resource are time-frequency resources or orthogonal code resources, and the first resource is different from the second resource.

According to this embodiment of the present invention, in 410, the first signal may be received according to first power; in 420, the second signal may be received according to second power, where a power deviation exists between the first power and the second power, and the power deviation is preset, or the power deviation is notified to the first device by signaling.

According to this embodiment of the present invention, the second power is higher than the first power. For example, the power deviation is a positive decibel dB value.

According to this embodiment of the present invention, the second period includes at least one orthogonal frequency division multiple access OFDMA symbol or at least one single-carrier frequency division multiple access SC-FDMA symbol or at least one transmission time interval TTI.

According to this embodiment of the present invention, when the second period includes at least one TTI, the second period includes a TTI, except a TTI used for transmitting a physical broadcast signal and a TTI used for switching downlink transmission to uplink transmission.

According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

According to this embodiment of the present invention, the first signal and the second signal are received separately at frequencies corresponding to consecutive subcarriers.

According to this embodiment of the present invention, the first signal is an OFDMA signal, and the second signal is an SC-FDMA signal; or the second signal is an OFDMA signal, and the first signal is SC-FDMA.

According to this embodiment of the present invention, the first device is a first network device; in 420, the first network device receives the second signal sent by first user equipment, where the second subcarrier-frequency mapping manner is the same as a subcarrier-frequency mapping manner that is used by the first network device to receive, in the second period, a signal sent by a second network device.

According to this embodiment of the present invention, the first device is a first network device; the first signal and the second signal are both reference signals; in 420, the first network device may receive the second signal by using a reference signal resource different from a reference signal resource that is used by a second network device to send a reference signal, where the second signal is sent by first user equipment.

According to this embodiment of the present invention, in 420, the second subcarrier, or a reference signal resource corresponding to the second signal is preconfigured.

According to this embodiment of the present invention, the first device is second user equipment; in 420, the second user equipment may receive the second signal sent by first user equipment, where the second subcarrier-frequency mapping manner is the same as a subcarrier-frequency mapping manner that is used by the second user equipment to receive, in the second period, a downlink signal sent by a third network device.

According to this embodiment of the present invention, the first signal and the second signal are both reference signals; in 420, the second user equipment may receive the second signal by using a reference signal resource different from a reference signal resource that is used by the third network device to send a reference signal, where the second signal is sent by the second user equipment, and the reference signal resource used by the second user equipment is configured by the third network device.

According to this embodiment of the present invention, before the determining, by the first device according to the second subcarrier-frequency mapping manner, the second frequency corresponding to the second subcarrier that is used for receiving the second signal in the second period, the method in FIG. 4 further includes: sending, by the first device, configuration signaling used for configuring the second period.

According to this embodiment of the present invention, the first device may send, to user equipment through a physical downlink control channel, the configuration signaling used for configuring the second period.

According to this embodiment of the present invention, the configuration signaling is dedicated signaling of the first device.

Optionally, as another embodiment, the method in FIG. 4 further includes: determining, by the first device according to the second subcarrier-frequency mapping manner, a fourth frequency corresponding to a fourth subcarrier that is used for receiving a fourth signal in the second period, and receiving the fourth signal at the fourth frequency, where a resource used by the first device to receive the fourth signal is the same as a resource used for receiving the second signal; and performing, by the first device, multiple-input multiple-output (Multiple Input Multiple Output, MIMO) receiving processing or multi-user multiple-input multiple-output (Multiple User-MIMO, MU-MIMO) MU-MIMO receiving processing or interference cancellation on the second signal and the fourth signal.

For example, in LTE, one physical resource block (Physical Resource Block, PRB) pair (PRB pair) includes one TTI in time and 12 subcarriers in frequency, and scheduling for uplink transmission (for example, a PUSCH) or downlink transmission (for example, a PDSCH) by a network device generally is performed in the unit of a PRB pair. For example, the first device is the first network device; in a case in which interference between signals is reduced by using an interference cancellation method, in a same TTI (for example, a second TTI in this embodiment), the first network device may allocate PRB pairs numbered 1 to 3 to the first user equipment that uses this embodiment of the present invention, and instruct the first user equipment to send a signal by using a downlink subcarrier-frequency mapping manner, and the second network device also sends a signal (for example, to another user equipment) by using the PRB pairs numbered 1 to 3 and by using the downlink subcarrier-frequency mapping manner. In this case, the signal sent by the second network device may cause interference on the signal sent by the first user equipment. Because the second network device and the first user equipment send signals by using the same subcarrier-frequency mapping manner, the first network device may first demodulate the signal sent by the second network device, regenerate an interference signal according to a demodulation result, and subtract the regenerated interference signal from the received signal, so as to obtain a signal affected by reduced interference and perform further receiving processing, thereby enhancing a capability of the first network device to receive the signal sent by the first user equipment. Specifically, for example, signals sent by the first user equipment and the second network device are S1 and S2, and channel fading that the two signals are subject to when reaching the first network device is HI and H2; then, a signal received by the first network device is R=S1× H1+ S2× H2+n, where n represents noise. The first network device may first estimate channel fading H2⁻ (estimated channel fading) that the signal sent by the second network device is subject to, and further perform demodulation and determine the sent signal as S2⁻ (demodulate the signal sent by the second network device); then the first network device can reconstruct a signal S2⁻× H2⁻ received from the second network device, and finally subtract S2⁻× H2⁻ from the received signal R, so as to obtain the signal sent by the first user equipment and affected by reduced interference, thereby enhancing receiving performance of the first network device for the signal sent by the first user equipment. However, in a conventional LTE system, misplacement of frequencies exists between a subcarrier-frequency mapping manner used by the first user equipment to send an uplink signal and a subcarrier-frequency mapping manner used by the second network device to send a downlink signal; therefore, inter-carrier interference exists between the two signals, and the interference cannot be reduced by using an interference cancellation method.

It should be noted that, in the foregoing embodiment, the description that a resource used by the first device to receive the fourth signal is the same as a resource used for receiving the second signal refers to a situation in which the resources are completely the same or the resources are partially the same. The foregoing gives an embodiment in which the resources are completely the same. For example, both the first user equipment and the second network device send signals by using the PRB pairs numbered 1 to 3. Actually, this embodiment of the present invention is also applicable to a situation in which the resources are partially the same. For example, the first user equipment sends a signal by using the PRB pairs numbered 1 to 3, and the second network device sends a signal by using PRB pairs numbered 3 to 6. The method in this embodiment of the present invention may also be used to reduce interference. For example, the interference cancellation method is used for the signal sent on the PRB pair numbered 3. The description in the following is similar, and no elaborate description is further provided subsequently.

Optionally, as another embodiment, the method in FIG. 4 further includes: determining, by the first device according to the second subcarrier-frequency mapping manner, a fourth frequency corresponding to a fourth subcarrier that is used for receiving a fourth signal in the second period, and receiving the fourth signal at the fourth frequency, where a resource used by the first device to receive the fourth signal is different from a resource used for receiving the second signal.

In other words, this embodiment of the present invention may reduce interference between signals by using a scheduling method. For example, in this embodiment of the present invention, the first device is a network device; in a same TTI (a second TTI), for example, the network device may allocate PRB pairs numbered 1 to 3 to user equipment that uses this embodiment of the present invention, instruct the user equipment to send a signal (an uplink signal) by using a downlink subcarrier-frequency mapping manner, and send a signal (a downlink signal) to another user equipment on PRB pairs numbered 4 to 6. Because a same subcarrier-frequency mapping manner is used by the user equipment to send a signal and used by the network device to send a signal and the signals are sent on different PRB pairs, interference does not exist between the signals. In this case, the signal sent by the user equipment that uses this embodiment of the present invention may not cause interference on the signal sent by the network device and received by another user equipment. However, in a conventional LTE system, due to particularity of a multi-carrier signal, it is infeasible to reduce interference in this manner. Misplacement of subcarriers exists between an uplink signal and a downlink signal, which may lead to inter-carrier interference (the interference can hardly be canceled even if different PRB pairs are allocated).

Optionally, as another embodiment, the first device is a network device, and the method in FIG. 4 further includes: receiving, by the network device, type indication information sent by user equipment; and determining, by the network device according to the type indication information, that the user equipment executes the method in FIG. 2.

According to this embodiment of the present invention, the type indication information includes interference cancellation capability identifier information of the user equipment or version information of a system supported by the user equipment.

Optionally, as another embodiment, the first device is a network device, and the method further includes: sending, by the network device, mode configuration information to user equipment, so as to configure the user equipment to execute the method in FIG. 2.

Optionally, as another embodiment, the first device is a network device, and the method in FIG. 4 further includes: sending, by the network device, a cell notification in a broadcast manner, where the cell notification is used for notifying that user equipment in a cell corresponding to the network device can execute the method in FIG. 2.

FIG. 5 is a schematic flowchart of a signal transmission method according to another embodiment of the present invention. The method in FIG. 5 is executed by a network device (for example, a base station). As a control node, the network device may schedule user equipment and another network device to execute a method similar to the embodiment of FIG. 2, and detailed descriptions are properly omitted.

510: A first network device schedules first user equipment, so that the first user equipment determines, according to a first subcarrier-frequency mapping manner, a first frequency corresponding to a first subcarrier that is used for mapping a first signal in a first period, and the first user equipment sends the first signal at the first frequency.

520: The first network device schedules a second network device, so that the second network device determines, according to the first subcarrier-frequency mapping manner, a second frequency corresponding to a second subcarrier that is used for mapping a second signal in the first period, and the second network device sends the second signal at the second frequency.

According to this embodiment of the present invention, a first network device may schedule a first user equipment and a second network device to transmit signals by using a same subcarrier-frequency mapping manner in a same period, thereby improving flexibility of uplink and downlink transmission, improving transmission performance of a system, and improving use efficiency of a frequency band. In addition, in a same subframe, during uplink transmission or downlink transmission, signals are transmitted by using the same subcarrier-frequency mapping manner, so that a receiver can reduce, by using a scheduling method or an interference cancellation method, interference between signals received in this subframe.

Optionally, as another embodiment, the first network device may also schedule the first user equipment, so that the first user equipment determines, according to a second subcarrier-frequency mapping manner, a third frequency corresponding to a third subcarrier that is used for mapping a third signal in the second period, and the first user equipment sends the third signal at the third frequency.

Optionally, as another embodiment, the first network device may also schedule the first user equipment, so that the first user equipment determines, according to the first subcarrier-frequency mapping manner, a fourth frequency corresponding to a fourth subcarrier that is used for receiving a fourth signal in a third period, and receives the fourth signal at the fourth frequency.

The first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set.

Optionally, as another embodiment, the first network device receives the first signal and the second signal, and performs multiple-input multiple-output MIMO receiving processing or multi-user multiple-input multiple-output MU-MIMO receiving processing or interference cancellation on the first signal and the second signal, where a scheduled resource of the first user equipment is the same as a scheduled resource of the second network device; or the first network device receives the first signal and the second signal, where a scheduled resource of the first user equipment is different from a scheduled resource of the second network device.

According to this embodiment of the present invention, the first network device schedules second user equipment, so that the second user equipment receives the first signal and the second signal, and performs multiple-input multiple-output MIMO receiving processing or multi-user multiple-input multiple-output MU-MIMO receiving processing or interference cancellation on the first signal and the second signal, where a scheduled resource of the first user equipment is the same as a scheduled resource of the second network device; or the first network device schedules second user equipment, so that the second user equipment receives the first signal and the second signal, where a scheduled resource of the first user equipment is different from a scheduled resource of the second network device.

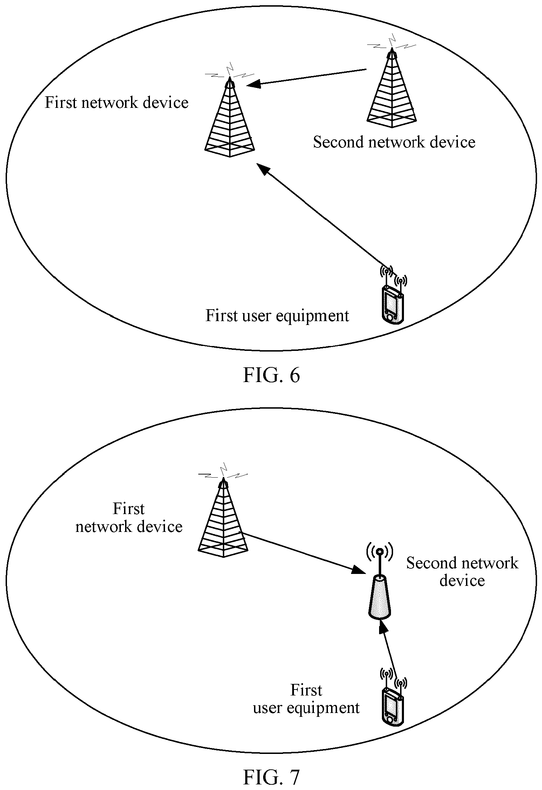

FIG. 6 is a schematic flowchart of a signal transmission scenario according to an embodiment of the present invention. The embodiment of FIG. 6 is an example of the method in FIG. 2.

In a dynamic TDD (that is, a configured ratio of uplink and downlink subframes of TDD may change dynamically, and configured ratios of uplink and downlink subframes of different network devices are different; therefore, different network devices consider a same TTI as a different uplink period/downlink period) scenario, first user equipment and a second network device send signals by using a same downlink subcarrier-frequency mapping manner, that is, a first network device receives, at the same time by using the same subcarrier-frequency mapping manner, the signals sent by the first user equipment and the second network device (for the signal sent by the first user equipment, the signal sent by the second network device is interference). The signal sent by the second network device may cause interference on an uplink signal sent by the first user equipment and received by the first network device. The first network device further instructs the first user equipment to use a subcarrier-frequency mapping manner that is the same as the subcarrier-frequency mapping manner used by the second network device to send a signal. To reduce interference, the second network device may send resource occupation information to the first network device in advance, so as to notify the first network device of a resource that is used by the second network device to send a signal (the resource includes time, a frequency, scrambling code, an RS resource, or the like). After receiving the resource occupation information, the first network device schedules a resource for the first user equipment, where the resource overlaps with a resource used by the second network device to send a signal. After receiving the signals sent by the first user equipment and the second network device, the first network device may reduce, in an interference cancellation manner, interference on receiving of the signal by the first network device caused by the signal sent by the second network device, so as to enhance receiving performance for the signal sent by the first user equipment. An embodiment in which the first network device schedules the second network device and the first user equipment to use nonoverlapped resources is the same as the foregoing descriptions, and details are not described herein again.

The first user equipment and the second network device send signals by using a same downlink subcarrier-frequency mapping manner; therefore, a scheduling method or an interference cancellation method may be used to reduce interference on the signal sent by the first user equipment caused by the signal sent by the second network device, thereby enhancing receiving performance of the first network device for the signal sent by the first user equipment.

Further, in this embodiment, a control node (not shown) may also be used to control or schedule the first network device and the second network device to send and receive signals; in this case, the second network device does not need to send the resource occupation information to the first network device in advance. For example, the control node controls the second network device to send a downlink signal to the second user equipment, controls the first network device to schedule a same resource for the first user equipment to send an uplink signal and use the subcarrier-frequency mapping manner that is the same as the subcarrier-frequency mapping manner used by the second network device to send a signal, and finally controls the first network device to perform an interference cancellation operation, so as to enhance receiving performance for the uplink signal sent by the first user equipment.

FIG. 7 is a schematic flowchart of a signal transmission scenario according to another embodiment of the present invention. The embodiment of FIG. 7 is an example of the method in FIG. 2.

In a wireless backhaul (wireless backhaul) scenario, a first network device and first user equipment sends wanted signals to a second network device at the same time by using a same frequency, and the second network device receives the two signals at the same time and demodulates the two signals. In a conventional technology, the first network device sends a downlink signal, and the first user equipment sends an uplink signal; the first network device and the first user equipment send signals to the second network device by using different subcarrier-frequency mapping manners so that inter-carrier interference exists between the two signals and the interference is hardly canceled. Different from the scenario in FIG. 6, in this scenario, for example, the first network device is a high-power node, the second network device is a low-power node, and the first network device has a capability of controlling the second network device. To send information to the first user equipment, the first network device may first send a signal to the second network device in a wireless manner (a transmission link between different network devices is called backhaul), and then the second network device forwards the signal to the first user equipment. This scenario is similar to a relay (Relay) scenario (a base station first sends a signal to a relay, and the relay then sends the signal to user equipment), and the difference lies in that, to prevent interference, transmission between the base station and the relay needs to occupy a reserved resource (for example, a reserved TTI or a reserved frequency band), where the resource cannot be used for transmitting another signal. However, in the present invention, the first network device and the user equipment may send the signals to the second network device by using the same time and frequency resource, which helps to improve transmission efficiency. According to this embodiment of the present invention, the first network device and the first user equipment may send wanted signals in the second TTI, and may demodulate the two signals in the second network device separately by using an interference cancellation technology, or demodulate the two signals by using a MIMO receiving algorithm or a multi-user multiple-input multiple-output (Multi-User Multiple Input and Multiple Output, MU-MIMO) receiving algorithm. In addition, a scheduling method may also be used to prevent interference, and a specific method may be the same as the foregoing scheduling method, and details are not described herein again.

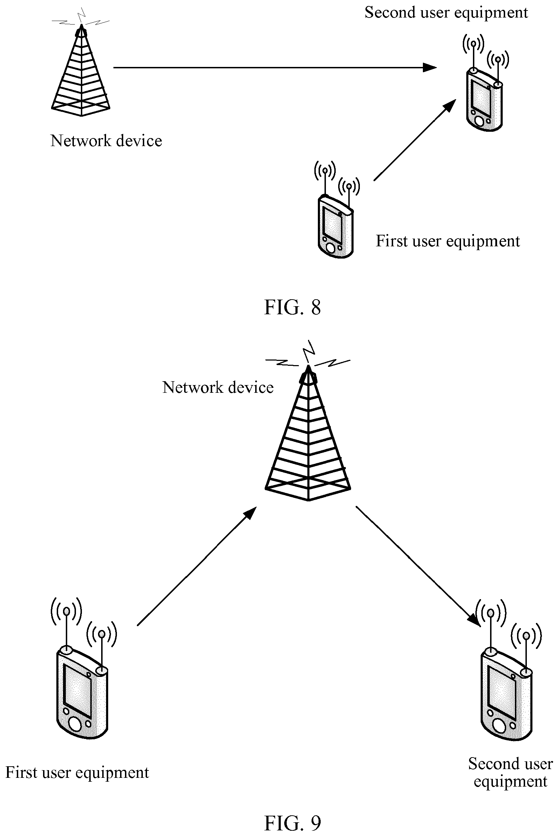

FIG. 8 is a schematic flowchart of a signal transmission scenario according to an embodiment of the present invention. The embodiment of FIG. 8 is an example of the method in FIG. 2.

In a transparent D2D scenario, first user equipment may communicate with a network device by using a conventional LTE method in TTIs numbered 2 and 4, and send a signal to second user equipment according to a downlink subcarrier-frequency mapping manner in a TTI numbered 3. The benefit lies in that, even if the second user equipment is user equipment (for example, earlier-version user equipment in the LTE) that does not support D2D transmission, benefits brought by D2D can also be obtained by using the solution in this embodiment of the present invention. In this case, the first user equipment sends the signal to the second user equipment by using the downlink subcarrier-frequency mapping manner, and the second user equipment receives, by using a manner that is the same as a manner of receiving a signal sent by the network device, the signal sent by the first user equipment.

Further, the network device may also send a signal to the second user equipment at the same time, which is the same as the foregoing example. The second user equipment may receive the two signals by using a receiving algorithm, such as interference cancellation or MIMO processing or multi-user multiple-input multiple-output processing, thereby improving transmission efficiency; or the network device may also send a signal to another user equipment at the same time, and the second user equipment may enhance, by using an IC receiving algorithm, receiving for the signal sent by the first user equipment. Signals sent by the first user equipment and the network device are mapped by using the same subcarrier-frequency mapping manner; therefore, interference between the signals can be reduced by using a scheduling method or an interference cancellation method.

FIG. 9 is a schematic flowchart of a signal transmission scenario according to an embodiment of the present invention. The embodiment of FIG. 9 is an example of the method in FIG. 2.

In a full duplex (full duplex) scenario, first user equipment may communicate with a network device by using a conventional LTE method in TTIs numbered 2 and 4, and send a signal to the network device according to a downlink subcarrier-frequency mapping manner in a TTI numbered 3; the network device sends a signal to second user equipment according to the downlink subcarrier-frequency mapping manner at the same time. In this case, the network device performs sending and receiving at the same time by using the same frequency, thereby improving transmission efficiency of the system. Likewise, the network device already knows a signal that is to be sent by itself, so that interference on the signal received from the first user equipment caused by the signal sent to the second user equipment can be reduced by using a scheduling method or an interference cancellation method.

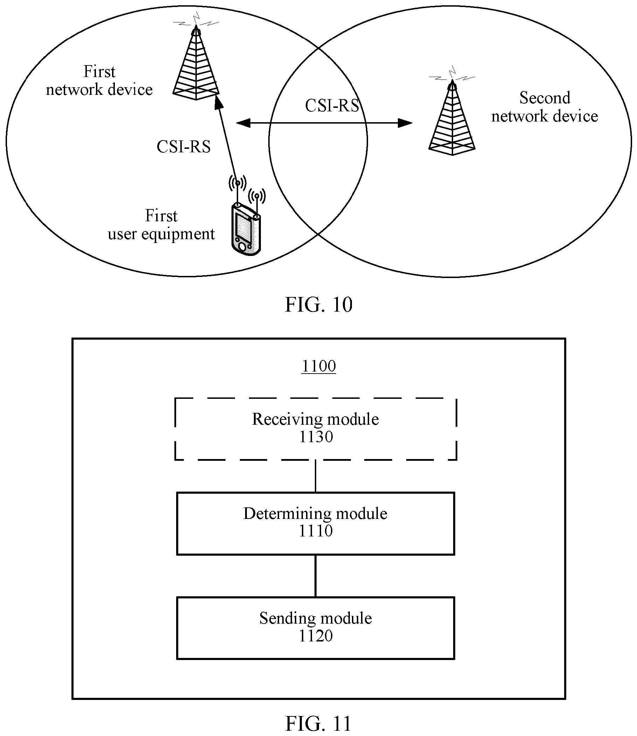

FIG. 10 is a schematic flowchart of a signal transmission scenario according to an embodiment of the present invention. The embodiment of FIG. 10 is an example of the method in FIG. 2.

In a scenario of mutual detection between network devices, first user equipment sends, by using a downlink subcarrier-frequency mapping manner in a second TTI, a reference signal used for measurement (for example, a downlink CSI-RS or an uplink SRS in an LTE system is information used for measuring a channel). At the same time, a first network device may also send a CSI-RS to a second network device, or receive a CSI-RS from the second network device. In this case, the same subcarrier-frequency mapping manner is used by the user equipment to send the CSI-RS and used to send the CSI-RS between the network devices, and used resources are orthogonal to each other, interference between them can be prevented. In this method, a reference signal can be sent between the network devices to detect channel conditions between the network devices. For example, the first network device sends a CSI-RS to the second network device, and the second network device can obtain the channel conditions between the two network devices according to the received CSI-RS, and obtains, according to the information, interference on the second network device that may be caused by the first network device, or channel conditions between the two network devices. By using the present invention, resources of an uplink signal and a downlink signal can be used more flexibly, so as to improve transmission efficiency, and prevent mutual interference between uplink and downlink reference signals used for measurement.

Embodiments of FIG. 6 to FIG. 10 use user equipment applied in the embodiments of the present invention as an example for description. In should be understood that, the embodiments of FIG. 6 to FIG. 10 may also be applied to a network device, which is not described herein any further.

FIG. 11 is a schematic structural block diagram of a signal transmission device 1100 according to an embodiment of the present invention. The device 1100 includes: a determining module 1110 and a sending module 1120.

The determining module 1110 is configured to determine, according to a first subcarrier-frequency mapping manner, a first frequency corresponding to a first subcarrier that is used for mapping a first signal in a first period, and determine, according to a second subcarrier-frequency mapping manner, a second frequency corresponding to a second subcarrier that is used for mapping a second signal in a second period; the sending module 1120 is configured to send the first signal at the first frequency determined by the determining module 1110, and send the second signal at the second frequency determined by the determining module 1110, where the first subcarrier-frequency mapping manner is different from the second subcarrier-frequency mapping manner, and the first frequency and the second frequency belong to a same frequency band.

According to this embodiment of the present invention, a first device may send a first signal by using a first subcarrier-frequency mapping manner in a first period, and send a second signal by using a second subcarrier-frequency mapping manner in a second period. The first device may send a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

Optionally, as another embodiment, the determining module 1110 is further configured to determine, according to the second subcarrier-frequency mapping manner, a third frequency corresponding to a third subcarrier that is used for receiving a third signal in a third period. The device 1100 further includes a receiving module 1130. The receiving module 1130 is configured to receive the third signal at the third frequency determined by the determining module 1110. According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set. Optionally, as another embodiment, the first signal and the second signal are both reference signals; the determining module 1110 is further configured to determine, according to a first reference signal-resource element mapping manner, a first resource element corresponding to the first signal in the first period, and determine, according to a second reference signal-resource element mapping manner, a second resource element corresponding to the second signal in the second period, where either resource element is uniquely determined by one symbol in a time domain and one subcarrier in a frequency domain; before sending the first signal, the sending module 1120 is further configured to map the first signal into the first resource element determined by the determining module; before sending the second signal, the sending module 1120 is further configured to map the second signal into the second resource element determined by the determining module 1110.

Optionally, as another embodiment, the first signal and the second signal are both control signals; the determining module 1110 is further configured to determine a first resource and a second resource, where the first resource and the second resource are time-frequency resources or orthogonal code resources, and the first resource is different from the second resource; before sending the first signal, the sending module 1120 is further configured to map the first signal into a subcarrier corresponding to the first resource determined by the determining module 1110; before sending the second signal, the sending module 1120 is further configured to map the second signal into a subcarrier corresponding to the second resource determined by the determining module 1110.

According to this embodiment of the present invention, the sending module 1120 receives the first signal according to first power, and receives the second signal according to second power, where a power deviation exists between the first power and the second power, and the power deviation is preset, or the power deviation is notified to the device 1100 by signaling.

According to this embodiment of the present invention, the second power is higher than the first power.

According to this embodiment of the present invention, the second period includes at least one orthogonal frequency division multiple access OFDMA symbol or at least one single-carrier frequency division multiple access SC-FDMA symbol or at least one transmission time interval TTI.

According to this embodiment of the present invention, when the second period includes at least one TTI, the second period includes a TTI, except a TTI used for transmitting a physical broadcast signal and a TTI used for switching downlink transmission to uplink transmission. According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

According to this embodiment of the present invention, the sending module 1120 sends the first signal and the second signal separately at frequencies corresponding to consecutive subcarriers. According to this embodiment of the present invention, the first signal is an OFDMA signal, and the second signal is an SC-FDMA signal; or the second signal is an OFDMA signal, and the first signal is SC-FDMA.

According to this embodiment of the present invention, the device 1100 is first user equipment, and the sending module 1120 sends the second signal to a first network device, where the second subcarrier-frequency mapping manner is the same as a subcarrier-frequency mapping manner that is used by the first network device to receive, in the second period, a signal sent by a second network device.

According to this embodiment of the present invention, the device 1100 is first user equipment, the first signal and the second signal are both reference signals, and the sending module 1120 sends the second signal to a first network device by using a reference signal resource different from a reference signal resource that is used by a second network device to send a reference signal.

According to this embodiment of the present invention, the second subcarrier, or a reference signal resource corresponding to the second signal is preconfigured.

According to this embodiment of the present invention, the device 1100 is first user equipment, and the sending module 1120 sends the second signal to second user equipment, where the second subcarrier-frequency mapping manner is the same as a subcarrier-frequency mapping manner that is used by the second user equipment to receive, in the second period, a downlink signal sent by a third network device.

According to this embodiment of the present invention, the first signal and the second signal are both reference signals, and the sending module 1120 sends the second signal to the second user equipment by using a reference signal resource different from a reference signal resource that is used by the third network device to send a reference signal, where the reference signal resource used by the sending module 1120 is configured by the third network device.

Optionally, as another embodiment, the device 1100 includes a receiving module 1130. The receiving module 1130 is configured to: before the determining module 1110 determines, according to the second subcarrier-frequency mapping manner, the second frequency corresponding to the second subcarrier that is used for mapping the second signal in the second period, receive configuration signaling used for configuring the second period.

According to this embodiment of the present invention, the configuration signaling is dedicated signaling of the device in FIG. 11.

Optionally, as another embodiment, the device 1100 is user equipment, and the sending module 1120 is further configured to send type indication information to a network device, so that the network device determines, according to the type indication information, whether the device 1100 executes the method in FIG. 2.

According to this embodiment of the present invention, the type indication information includes interference cancellation capability identifier information of the user equipment or version information of a system supported by the user equipment.

Optionally, as another embodiment, the device 1100 is user equipment, and the user equipment further includes a receiving module 1130. The receiving module 1130 is configured to receive mode configuration information sent by a network device, where the mode configuration information is used for configuring the user equipment to execute the method in FIG. 2. Optionally, as another embodiment, the device 1100 is user equipment, and the user equipment further includes a receiving module 1130. The receiving module 1130 is configured to receive a cell notification that is sent by a network device in a broadcast manner, where the cell notification is used for notifying that user equipment in a cell corresponding to the network device can execute the method in FIG. 2.

According to this embodiment of the present invention, the device 1100 is user equipment or a network device.

For operations and functions of units of the device 1100, reference may be made to the method embodiment corresponding to FIG. 2, and details are not described herein again to avoid repetition.

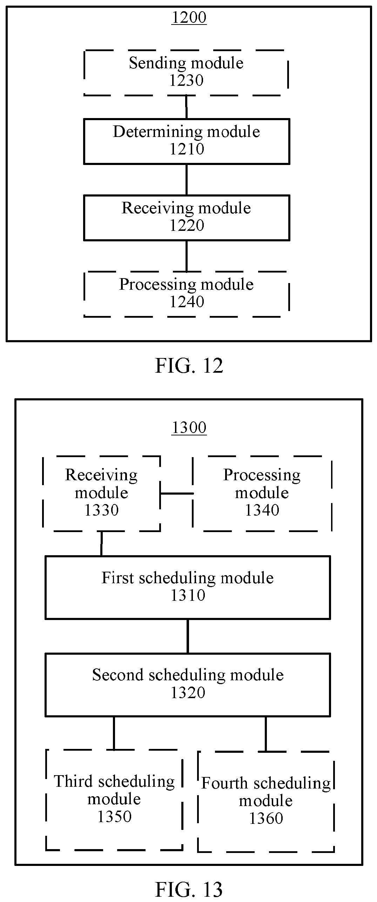

FIG. 12 is a schematic structural block diagram of a signal transmission device 1200 according to another embodiment of the present invention. The device 1200 includes: a determining module 1210 and a receiving module 1220.

The determining module 1210 is configured to determine, according to a first subcarrier-frequency mapping manner, a first frequency corresponding to a first subcarrier that is used for receiving a first signal in a first period, and determine, according to a second subcarrier-frequency mapping manner, a second frequency corresponding to a second subcarrier that is used for receiving a second signal in a second period; the receiving module 1220 is configured to receive the first signal at the first frequency determined by the determining module 1210, and receive the second signal at the second frequency determined by the determining module 1210, where the first subcarrier-frequency mapping manner is different from the second subcarrier-frequency mapping manner, and the first frequency and the second frequency belong to a same frequency band.

According to this embodiment of the present invention, a first device may receive a first signal by using a first subcarrier-frequency mapping manner in a first period, and receive a second signal by using a second subcarrier-frequency mapping manner in a second period. The first device may receive a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

Optionally, as another embodiment, the determining module 1210 is further configured to determine, according to the second subcarrier-frequency mapping manner, a third frequency corresponding to a third subcarrier that is used for mapping a third signal in a third period. The device 1200 further includes a sending module 1230. The sending module 1230 is configured to send the third signal at the third frequency determined by the determining module 1210. According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set. Optionally, as another embodiment, the first signal and the second signal are both reference signals; the determining module 1210 is further configured to determine, according to a first reference signal-resource element mapping manner, a first resource element corresponding to the first signal in the first period, and determine, according to a second reference signal-resource element mapping manner, a second resource element corresponding to the second signal in the second period, where either resource element is uniquely determined by one symbol in a time domain and one subcarrier in a frequency domain; after receiving the first signal, the receiving module 1220 is further configured to obtain the first signal from the first resource element determined by the determining module 1210; after receiving the second signal, the receiving module 1220 is further configured to obtain the second signal from the second resource element determined by the determining module 1210.

Optionally, as another embodiment, the first signal and the second signal are both control signals; the determining module 1210 is further configured to determine a first resource and a second resource, where the first resource and the second resource are time-frequency resources or orthogonal code resources, and the first resource is different from the second resource; after receiving the first signal, the receiving module 1220 is further configured to obtain the first control signal from a subcarrier corresponding to the first resource determined by the determining module 1210; after receiving the second signal, the receiving module 1220 is further configured to obtain the second control signal from a subcarrier corresponding to the second resource determined by the determining module 1210.

According to this embodiment of the present invention, the receiving module 1220 receives the first signal according to first power, and receives the second signal according to second power, where a power deviation exists between the first power and the second power, and the power deviation is preset, or the power deviation is notified to the device 1200 by signaling.

According to this embodiment of the present invention, the second power is higher than the first power.

According to this embodiment of the present invention, the second period includes at least one orthogonal frequency division multiple access OFDMA symbol or at least one single-carrier frequency division multiple access SC-FDMA symbol or at least one transmission time interval TTI.

According to this embodiment of the present invention, when the second period includes at least one TTI, the second period includes a TTI, except a TTI used for transmitting a physical broadcast signal and a TTI used for switching downlink transmission to uplink transmission. According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

According to this embodiment of the present invention, the receiving module 1220 receives the first signal and the second signal separately at frequencies corresponding to consecutive subcarriers.

According to this embodiment of the present invention, the first signal is an OFDMA signal, and the second signal is an SC-FDMA signal; or the second signal is an OFDMA signal, and the first signal is SC-FDMA.

According to this embodiment of the present invention, the device 1200 is a first network device, and the receiving module 1220 receives the second signal sent by first user equipment, where the second subcarrier-frequency mapping manner is the same as a subcarrier-frequency mapping manner that is used by the first network device to receive, in the second period, a signal sent by a second network device.

According to this embodiment of the present invention, the device 1200 is a first network device, the first signal and the second signal are both reference signals, and the receiving module 1220 receives the second signal by using a reference signal resource different from a reference signal resource that is used by a second network device to send a reference signal, where the second signal is sent by first user equipment.

According to this embodiment of the present invention, the second subcarrier, or a reference signal resource corresponding to the second signal is preconfigured.

According to this embodiment of the present invention, the device 1200 is second user equipment, and the receiving module 1220 receives the second signal sent by first user equipment, where the second subcarrier-frequency mapping manner is the same as a subcarrier-frequency mapping manner that is used by the receiving module 1220 to receive, in the second period, a downlink signal sent by a third network device.

According to this embodiment of the present invention, the first signal and the second signal are both reference signals, and the receiving module 1220 receives the second signal by using a reference signal resource different from a reference signal resource that is used by the third network device to send a reference signal, where the second signal is sent by the second user equipment, and the reference signal resource used by the receiving module 1220 is configured by the third network device.

Optionally, as another embodiment, the device 1200 further includes a sending module 1230, configured to: before the determining module 1210 determines, according to the second subcarrier-frequency mapping manner, the second frequency corresponding to the second subcarrier that is used for receiving the second signal in the second period, send configuration signaling used for configuring the second period.

Optionally, as another embodiment, the determining module 1210 is further configured to determine, according to the second subcarrier-frequency mapping manner, a fourth frequency corresponding to a fourth subcarrier that is used for receiving a fourth signal in the second period, and the receiving module 1220 is further configured to receive the fourth signal at the fourth frequency, where a resource used by the receiving module 1220 to receive the fourth signal is the same as a resource used to receive the second signal; the device 1200 further includes a processing module 1240, configured to perform multiple-input multiple-output MIMO receiving processing or multi-user multiple-input multiple-output MU-MIMO receiving processing or interference cancellation on the second signal and the fourth signal.

Optionally, as another embodiment, the determining module 1210 is further configured to determine, according to the second subcarrier-frequency mapping manner, a fourth frequency corresponding to a fourth subcarrier that is used for receiving a fourth signal in the second period, and the receiving module 1220 is further configured to receive the fourth signal at the fourth frequency, where a resource used by the receiving module 1220 to receive the fourth signal is different from a resource used for receiving the second signal.

According to this embodiment of the present invention, the sending module 1230 sends, to user equipment through a physical downlink control channel, the configuration signaling used for configuring the second period.

According to this embodiment of the present invention, the configuration signaling is dedicated signaling of the device in FIG. 12.

Optionally, as another embodiment, the device 1200 is a network device; the receiving module 1220 is further configured to receive type indication information sent by user equipment; the determining module 1210 is further configured to determine, according to the type indication information, that the user equipment executes the method in FIG. 2.

According to this embodiment of the present invention, the type indication information includes interference cancellation capability identifier information of the user equipment or version information of a system supported by the user equipment.

Optionally, as another embodiment, the device 1200 is a network device, and the device 1200 further includes a sending module 1230. The sending module 1230 is configured to send mode configuration information to user equipment, where the mode configuration information is used for configuring the user equipment to execute the method in FIG. 2.

Optionally, as another embodiment, the device 1200 is a network device, and the network device further includes a sending module 1230. The sending module 1230 is configured to send a cell notification in a broadcast manner, where the cell notification is used for notifying that user equipment in a cell corresponding to the network device can execute the method in FIG. 2. According to this embodiment of the present invention, the device 1200 is a network device or user equipment.

For operations and functions of units of the device 1200, reference may be made to the method embodiment corresponding to FIG. 4, and details are not described herein again to avoid repetition.

FIG. 13 is a schematic structural block diagram of a signal transmission device 1300 according to another embodiment of the present invention. The device 1300 includes a first scheduling module 1310 and a second scheduling module 1320.

The first scheduling module 1310 is configured to schedule first user equipment, so that the first user equipment determines, according to a first subcarrier-frequency mapping manner, a first frequency corresponding to a first subcarrier that is used for mapping a first signal in a first period, and the first user equipment sends the first signal at the first frequency; the second scheduling module 1320 is configured to schedule a second network device, so that the second network device determines, according to the first subcarrier-frequency mapping manner, a second frequency corresponding to a second subcarrier that is used for mapping a second signal in the first period, and the second network device sends the second signal at the second frequency.

According to this embodiment of the present invention, a first network device may schedule a first user equipment and a second network device to transmit signals by using a same subcarrier-frequency mapping manner in a same period, thereby improving flexibility of uplink and downlink transmission, improving transmission performance of a system, and improving use efficiency of a frequency band. In addition, in a same subframe, during uplink transmission or downlink transmission, signals are transmitted by using the same subcarrier-frequency mapping manner, so that a receiver can reduce, by using a scheduling method or an interference cancellation method, interference between signals received in this subframe.

Optionally, as another embodiment, the device 1300 further includes a receiving module 1330, configured to receive the first signal and the second signal; if a scheduled resource of the first user equipment is the same as a scheduled resource of the second network device, the device further includes a processing module 1340, configured to perform multiple-input multiple-output MIMO receiving processing or multi-user multiple-input multiple-output MU-MIMO receiving processing or interference cancellation on the first signal and the second signal.

Optionally, as another embodiment, the device 1300 further includes a third scheduling module 1350, configured to schedule second user equipment, so that the second user equipment receives the first signal and the second signal, and performs multiple-input multiple-output MIMO receiving processing or multi-user multiple-input multiple-output MU-MIMO receiving processing or interference cancellation on the first signal and the second signal, where a scheduled resource of the first user equipment is the same as a scheduled resource of the second network device; or a fourth scheduling module 1360, configured to schedule second user equipment, so that the second user equipment receives the first signal and the second signal, where a scheduled resource of the first user equipment is different from a scheduled resource of the second network device.

For operations and functions of units of the device 1300, reference may be made to the method embodiment corresponding to FIG. 5, and details are not described herein again to avoid repetition.

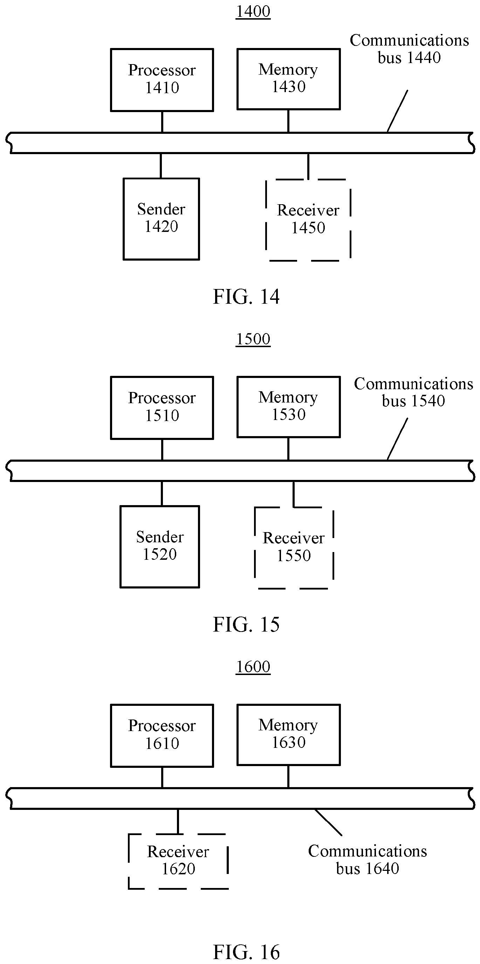

FIG. 14 is a schematic structural block diagram of a signal transmission device 1400 according to another embodiment of the present invention. The device 1400 includes a processor 1410, a sender 1420, a memory 1430, and a communications bus 1440.

The processor 1410 is configured to invoke, by using the communications bus 1440, code stored in the memory 1430, so as to determine, according to a first subcarrier-frequency mapping manner, a first frequency corresponding to a first subcarrier that is used for mapping a first signal in a first period, and determine, according to a second subcarrier-frequency mapping manner, a second frequency corresponding to a second subcarrier that is used for mapping a second signal in a second period; the sender 1420 is configured to send the first signal at the first frequency determined by the processor 1410, and send the second signal at the second frequency determined by the processor 1410, where the first subcarrier-frequency mapping manner is different from the second subcarrier-frequency mapping manner, and the first frequency and the second frequency belong to a same frequency band.

According to this embodiment of the present invention, a first device may send a first signal by using a first subcarrier-frequency mapping manner in a first period, and send a second signal by using a second subcarrier-frequency mapping manner in a second period. The first device may send a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

Optionally, as another embodiment, the processor 1410 is further configured to determine, according to the second subcarrier-frequency mapping manner, a third frequency corresponding to a third subcarrier that is used for receiving a third signal in a third period. The device 1400 further includes a receiver 1450. The receiver 1450 is configured to receive the third signal at the third frequency determined by the processor 1410.

According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set. Optionally, as another embodiment, the first signal and the second signal are both reference signals; the processor 1410 is further configured to determine, according to a first reference signal-resource element mapping manner, a first resource element corresponding to the first signal in the first period, and determine, according to a second reference signal-resource element mapping manner, a second resource element corresponding to the second signal in the second period, where either resource element is uniquely determined by one symbol in a time domain and one subcarrier in a frequency domain; before sending the first signal, the sender 1420 is further configured to map the first signal into the first resource element determined by the processor 1410; before sending the second signal, the sender 1420 is further configured to map the second signal into the second resource element determined by the processor 1410. Optionally, as another embodiment, the first signal and the second signal are both control signals; the processor 1410 is further configured to determine a first resource and a second resource, where the first resource and the second resource are time-frequency resources or orthogonal code resources, and the first resource is different from the second resource; before sending the first signal, the sender 1420 is further configured to map the first signal into a subcarrier corresponding to the first resource determined by the processor 1410; before sending the second signal, the sender 1420 is further configured to map the second signal into a subcarrier corresponding to the second resource determined by the processor 1410.

According to this embodiment of the present invention, the sender 1420 sends the first signal according to first power, and sends the second signal according to second power, where a power deviation exists between the first power and the second power, and the power deviation is preset, or the power deviation is notified to the device 1400 by signaling.

According to this embodiment of the present invention, the second power is higher than the first power.

According to this embodiment of the present invention, the second period includes at least one orthogonal frequency division multiple access OFDMA symbol or at least one single-carrier frequency division multiple access SC-FDMA symbol or at least one transmission time interval TTI.

According to this embodiment of the present invention, when the second period includes at least one TTI, the second period includes a TTI, except a TTI used for transmitting a physical broadcast signal and a TTI used for switching downlink transmission to uplink transmission.

According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

According to this embodiment of the present invention, the sender 1420 sends the first signal and the second signal separately at frequencies corresponding to consecutive subcarriers.

According to this embodiment of the present invention, the first signal is an OFDMA signal, and the second signal is an SC-FDMA signal; or the second signal is an OFDMA signal, and the first signal is SC-FDMA.

According to this embodiment of the present invention, the device 1400 is first user equipment, and the sender 1420 sends the second signal to a first network device, where the second subcarrier-frequency mapping manner is the same as a subcarrier-frequency mapping manner that is used by the first network device to receive, in the second period, a signal sent by a second network device.

According to this embodiment of the present invention, the device 1400 is first user equipment, the first signal and the second signal are both reference signals, and the sender 1420 sends the second signal to a first network device by using a reference signal resource different from a reference signal resource that is used by a second network device to send a reference signal. According to this embodiment of the present invention, the second subcarrier, or a reference signal resource corresponding to the second signal is preconfigured.

According to this embodiment of the present invention, the first device is user equipment, the device 1400 is the first user equipment, and the sender 1420 sends the second signal to second user equipment, where the second subcarrier-frequency mapping manner is the same as a subcarrier-frequency mapping manner that is used by the second user equipment to receive, in the second period, a downlink signal sent by a third network device.

According to this embodiment of the present invention, the first signal and the second signal are both reference signals, and the sender 1420 sends the second signal to the second user equipment by using a reference signal resource different from a reference signal resource that is used by the third network device to send a reference signal, where the reference signal resource used by the sender 1420 is configured by the third network device.

Optionally, as another embodiment, the device 1400 further includes a receiver 1450, configured to: before the processor 1410 determines, according to the second subcarrier-frequency mapping manner, the second frequency corresponding to the second subcarrier that is used for mapping the second signal in the second period, receive configuration signaling used for configuring the second period.

Optionally, as another embodiment, the receiver 1450 receives, through a physical downlink control channel, the configuration signaling used for configuring the second period.

According to this embodiment of the present invention, the configuration signaling is dedicated signaling of the device in FIG. 14.

Optionally, as another embodiment, the device 1400 is user equipment, and the sender 1420 is further configured to send type indication information to a network device, so that the network device determines, according to the type indication information, whether the device 1400 executes the method in FIG. 2.

According to this embodiment of the present invention, the type indication information includes interference cancellation capability identifier information of the user equipment or version information of a system supported by the user equipment.

Optionally, as another embodiment, the device 1400 is user equipment, and the user equipment further includes a receiver 1450. The receiver 1450 is configured to receive mode configuration information sent by a network device, where the mode configuration information is used for configuring the user equipment to execute the method in FIG. 2.

Optionally, as another embodiment, the device 1400 is user equipment, and the user equipment further includes a receiver 1450. The receiver 1450 is configured to receive a cell notification that is sent by a network device in a broadcast manner, where the cell notification is used for notifying that user equipment in a cell corresponding to the network device can execute the method in FIG. 2.

According to this embodiment of the present invention, the device 1400 is user equipment or a network device.

For operations and functions of units of the device 1400, reference may be made to the method embodiment corresponding to FIG. 2, and details are not described herein again to avoid repetition.

FIG. 15 is a schematic structural block diagram of a signal transmission device 1500 according to another embodiment of the present invention. The device 1500 includes a processor 1510, a receiver 1520, a memory 1530, and a communications bus 1540.

The processor 1510 is configured to invoke, by using the communications bus 1540, code stored in the memory 1530, so as to determine, according to a first subcarrier-frequency mapping manner, a first frequency corresponding to a first subcarrier that is used for receiving a first signal in a first period, and determine, according to a second subcarrier-frequency mapping manner, a second frequency corresponding to a second subcarrier that is used for receiving a second signal in a second period; the receiver 1510 is configured to receive the first signal at the first frequency determined by the processor 1510, and receive the second signal at the second frequency determined by the processor 1510, where the first subcarrier-frequency mapping manner is different from the second subcarrier-frequency mapping manner, and the first frequency and the second frequency belong to a same frequency band.

According to this embodiment of the present invention, a first device may receive a first signal by using a first subcarrier-frequency mapping manner in a first period, and receive a second signal by using a second subcarrier-frequency mapping manner in a second period. The first device may receive a signal by using different (for example, uplink and downlink) subcarrier-frequency mapping manners in different periods; therefore, the first device (for example, user equipment or a network device) can perform uplink transmission or downlink transmission in required periods flexibly, thereby improving transmission performance of a system, and improving use efficiency of a frequency band.

Optionally, as another embodiment, the processor 1510 is further configured to determine, according to the second subcarrier-frequency mapping manner, a third frequency corresponding to a third subcarrier that is used for mapping a third signal in a third period, and the device 1500 further includes a sender 1550, configured to send the third signal at the third frequency determined by the processor 1510.

According to this embodiment of the present invention, the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set. Optionally, as another embodiment, the first signal and the second signal are both reference signals; the processor 1510 is further configured to determine, according to a first reference signal-resource element mapping manner, a first resource element corresponding to the first signal in the first period, and determine, according to a second reference signal-resource element mapping manner, a second resource element corresponding to the second signal in the second period, where either resource element is uniquely determined by one symbol in a time domain and one subcarrier in a frequency domain; after receiving the first signal, the receiver 1520 is further configured to obtain the first signal from the first resource element determined by the processor 1510; after receiving the second signal, the receiver 1520 is further configured to obtain the second signal from the second resource element determined by the processor 1510.

Optionally, as another embodiment, the first signal and the second signal are both control signals; the processor 1510 is further configured to determine a first resource and a second resource, where the first resource and the second resource are time-frequency resources or orthogonal code resources, and the first resource is different from the second resource; after receiving the first signal, the receiver 1520 is further configured to obtain the first control signal from a subcarrier corresponding to the first resource determined by the processor 1510; after receiving the second signal, the receiver 1520 is further configured to obtain the second control signal from a subcarrier corresponding to the second resource determined by the processor 1510.

According to this embodiment of the present invention, the receiver 1520 receives the first signal according to first power, and receives the second signal according to second power, where a power deviation exists between the first power and the second power, and the power deviation is preset, or the power deviation is notified to the device in FIG. 15 by signaling.

According to this embodiment of the present invention, the second power is higher than the first power.

According to this embodiment of the present invention, the second period includes at least one orthogonal frequency division multiple access OFDMA symbol or at least one single-carrier frequency division multiple access SC-FDMA symbol or at least one transmission time interval TTI.

According to this embodiment of the present invention, when the second period includes at least one TTI, the second period includes a TTI, except a TTI used for transmitting a physical broadcast signal and a TTI used for switching downlink transmission to uplink transmission. According to this embodiment of the present invention, a system bandwidth to which the first subcarrier and the second subcarrier belong includes multiple subcarriers, where one half of the subcarriers are high-frequency band subcarriers, and the other half of the subcarriers are low-frequency band subcarriers; and in the second period, the second subcarrier is a subset of the high-frequency band subcarriers or the low-frequency band subcarriers.

According to this embodiment of the present invention, the receiver 1520 receives the first signal and the second signal separately at frequencies corresponding to consecutive subcarriers. According to this embodiment of the present invention, the first signal is an OFDMA signal, and the second signal is an SC-FDMA signal; or the second signal is an OFDMA signal, and the first signal is SC-FDMA.

According to this embodiment of the present invention, the device 1500 is a first network device, and the receiver 1520 receives the second signal sent by first user equipment, where the second subcarrier-frequency mapping manner is the same as a subcarrier-frequency mapping manner that is used by the first network device to receive, in the second period, a signal sent by a second network device.

According to this embodiment of the present invention, the device 1500 is a first network device, the first signal and the second signal are both reference signals, and the receiver 1520 receives the second signal by using a reference signal resource different from a reference signal resource that is used by a second network device to send a reference signal, where the second signal is sent by first user equipment.

According to this embodiment of the present invention, the second subcarrier, or a reference signal resource corresponding to the second signal is preconfigured.

According to this embodiment of the present invention, the device 1500 is second user equipment, the receiver 1520 receives the second signal sent by first user equipment, where the second subcarrier-frequency mapping manner is the same as a subcarrier-frequency mapping manner that is used by the receiver 1520 to receive, in the second period, a downlink signal sent by a third network device.

According to this embodiment of the present invention, the first signal and the second signal are both reference signals, and the receiver 1520 receives the second signal by using a reference signal resource different from a reference signal resource that is used by the third network device to send a reference signal, where the second signal is sent by the second user equipment, and the reference signal resource used by the receiver 1520 is configured by the third network device. Optionally, as another embodiment, the device 1500 further includes a sender 1550, configured to: before the processor 1510 determines, according to the second subcarrier-frequency mapping manner, the second frequency corresponding to the second subcarrier that is used for receiving the second signal in the second period, send configuration signaling used for configuring the second period.

Optionally, as another embodiment, the processor 1510 is further configured to determine, according to the second subcarrier-frequency mapping manner, a fourth frequency corresponding to a fourth subcarrier that is used for receiving a fourth signal in the second period, and the receiver 1520 is further configured to receive the fourth signal at the fourth frequency, where a resource used by the receiver 1520 to receive the fourth signal is the same as a resource used to receive the second signal; the processor 1510 is further configured to perform multiple-input multiple-output MIMO receiving processing or multi-user multiple-input multiple-output MU-MIMO receiving processing or interference cancellation on the second signal and the fourth signal.

Optionally, as another embodiment, the processor 1510 is further configured to determine, according to the second subcarrier-frequency mapping manner, a fourth frequency corresponding to a fourth subcarrier that is used for receiving a fourth signal in the second period, and the receiver 1520 is further configured to receive the fourth signal at the fourth frequency, where a resource used by the receiver 1520 to receive the fourth signal is different from a resource used for receiving the second signal.

According to this embodiment of the present invention, the sender 1550 sends, to user equipment through a physical downlink control channel, the configuration signaling used for configuring the second period.

According to this embodiment of the present invention, the configuration signaling is dedicated signaling of the device in FIG. 15.

Optionally, as another embodiment, the device 1500 is a network device; the receiver 1520 is further configured to receive type indication information sent by the user equipment; the processor 1510 is further configured to determine, according to the type indication information received by the receiver 1520, that the user equipment executes the method in FIG. 2. According to this embodiment of the present invention, the type indication information includes interference cancellation capability identifier information of the user equipment or version information of a system supported by the user equipment.

Optionally, as another embodiment, the network device further includes a sender 1550, configured to send mode configuration information to the user equipment, where the mode configuration information is used for configuring the user equipment to execute the method in FIG. 2.

Optionally, as another embodiment, the device 1500 is a network device, and the network device further includes a sender 1550, configured to send a cell notification in a broadcast manner, where the cell notification is used for notifying that user equipment in a cell corresponding to the network device can execute the method in FIG. 2.

According to this embodiment of the present invention, the device 1500 is a network device or user equipment.

For operations and functions of units of the device 1500, reference may be made to the method embodiment corresponding to FIG. 4, and details are not described herein again to avoid repetition.

FIG. 16 is a schematic structural block diagram of a signal transmission device 1600 according to another embodiment of the present invention. The device 1600 includes a processor 1610, a memory 1630, and a communications bus 1640.

The processor 1610 is configured to invoke, by using the communications bus 1640, code stored in the memory 1630, so as to schedule first user equipment, so that the first user equipment determines, according to a first subcarrier-frequency mapping manner, a first frequency corresponding to a first subcarrier that is used for mapping a first signal in a first period, and the first user equipment sends the first signal at the first frequency; and is configured to schedule a second network device, so that the second network device determines, according to the first subcarrier-frequency mapping manner, a second frequency corresponding to a second subcarrier that is used for mapping a second signal in the first period, and the second network device sends the second signal at the second frequency.

According to this embodiment of the present invention, a first network device may schedule a first user equipment and a second network device to transmit signals by using a same subcarrier-frequency mapping manner in a same period, thereby improving flexibility of uplink and downlink transmission, improving transmission performance of a system, and improving use efficiency of a frequency band. In addition, in a same subframe, during uplink transmission or downlink transmission, signals are transmitted by using the same subcarrier-frequency mapping manner, so that a receiver can reduce, by using a scheduling method or an interference cancellation method, interference between signals received in this subframe.

Optionally, as another embodiment, a scheduled resource of the first user equipment is the same as a scheduled resource of the second network device, and the device 1600 further includes a receiver 1620. The receiver 1620 is configured to receive the first signal and the second signal; if a scheduled resource of the first user equipment is the same as a scheduled resource of the second network device, the processor 1610 is further configured to perform multiple-input multiple-output MIMO receiving processing or multi-user multiple-input multiple-output MU-MIMO receiving processing or interference cancellation on the first signal and the second signal.

Optionally, as another embodiment, the processor 1610 is further configured to schedule second user equipment, so that the second user equipment receives the first signal and the second signal, and performs multiple-input multiple-output MIMO receiving processing or multi-user multiple-input multiple-output MU-MIMO receiving processing or interference cancellation on the first signal and the second signal, where a scheduled resource of the first user equipment is the same as a scheduled resource of the second network device; or the processor 1610 is configured to schedule second user equipment, so that the second user equipment receives the first signal and the second signal, where a scheduled resource of the first user equipment is different from a scheduled resource of the second network device.

For operations and functions of units of the device 1600, reference may be made to the method embodiment corresponding to FIG. 5, and details are not described herein again to avoid repetition.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A signal transmission method, comprising:
determining, by a first device according to a first subcarrier-frequency mapping manner, a first frequency corresponding to a first subcarrier that is used for mapping a first signal in a first period, and sending the first signal at the first frequency, wherein the first subcarrier-frequency mapping manner is an uplink subcarrier-frequency mapping manner; and
determining, by the first device according to a second subcarrier-frequency mapping manner, a second frequency corresponding to a second subcarrier that is used for mapping a second signal in a second period, and sending the second signal at the second frequency, wherein the second subcarrier-frequency mapping manner is a downlink subcarrier-frequency mapping manner, wherein:
the first subcarrier-frequency mapping manner is different from the second subcarrier-frequency mapping manner, the first frequency and the second frequency belong to a same frequency band, and the second period comprises one or more transmission time intervals except a transmission time interval used for transmitting a physical broadcast signal and a transmission time interval used for switching a downlink transmission to an uplink transmission, wherein
subcarriers in the first subcarrier-frequency mapping manner and in the second subcarrier-frequency mapping manner are of a subcarrier frequency width Δf, and the subcarriers in the first subcarrier-frequency mapping relationship are offset from the subcarriers in the second subcarrier-frequency mapping relationship by (N+1/2) Δf, N being an integer.

2. The method according to claim 1, further comprising:
determining, by the first device according to the second subcarrier-frequency mapping manner, a third frequency corresponding to a third subcarrier that is used for receiving a third signal in a third period, and receiving the third signal at the third frequency.

3. The method according to claim 1 or 2, wherein the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set.

4. The method according to any one of claims 1 to 3, wherein the first signal and the second signal are both reference signals;
the method further comprises:
determining, by the first device according to a first reference signal-resource element mapping manner, a first resource element corresponding to the first signal in the first period, and determining, according to a second reference signal-resource element mapping manner, a second resource element corresponding to the second signal in the second period;
before the sending, by the first device, the first signal at the first frequency, the method further comprises:
mapping, by the first device, the first signal into the first resource element; and
before the sending, by the first device, the second signal at the second frequency, the method further comprises:
mapping, by the first device, the second signal into the second resource element, wherein:
either resource element is uniquely determined by one symbol in a time domain and one subcarrier in a frequency domain.

5. The method according to any one of claims 1 to 3, wherein the first signal and the second signal are both control signals;
before the sending, by the first device, the first signal at the first frequency, the method further comprises:
mapping, by the first device, the first signal into a subcarrier corresponding to a determined first resource; and
before the sending, by the first device, the second signal at the second frequency, the method further comprises:
mapping, by the first device, the second signal into a subcarrier corresponding to a determined second resource, wherein:
the first resource and the second resource are time-frequency resources or orthogonal code resources, and the first resource is different from the second resource.

6. The method according to any one of claims 1 to 5, further comprising:
sending, by the first device, type indication information to a network device, wherein the type indication information includes interference cancellation capability identifier information of the first device.

7. A signal transmission device, comprising:
a determining module (1110), configured to determine, according to a first subcarrier-frequency mapping manner, a first frequency corresponding to a first subcarrier that is used for mapping a first signal in a first period, wherein the first subcarrier-frequency mapping manner is an uplink subcarrier-frequency mapping manner, and determine, according to a second subcarrier-frequency mapping manner, a second frequency corresponding to a second subcarrier that is used for mapping a second signal in a second period, wherein the second subcarrier-frequency mapping manner is a downlink subcarrier-frequency mapping manner; and
a sending module (1120), configured to send the first signal at the first frequency determined by the determining module (1110), and send the second signal at the second frequency determined by the determining module (1110), wherein:
the first subcarrier-frequency mapping manner is different from the second subcarrier-frequency mapping manner, the first frequency and the second frequency belong to a same frequency band, and the second period comprises one or more transmission time intervals except a transmission time interval used for transmitting a physical broadcast signal and a transmission time interval used for switching a downlink transmission to an uplink tra nsm ission,
wherein subcarriers in the first subcarrier-frequency mapping manner and in the second subcarrier-frequency mapping manner are of a subcarrier frequency width Δf, and the subcarriers in the first subcarrier-frequency mapping relationship are offset from the subcarriers in the second subcarrier-frequency mapping relationship by (N+1/2) Δf, N being an integer.

8. The device according to claim 7, wherein the determining (1110) module is further configured to determine, according to the second subcarrier-frequency mapping manner, a third frequency corresponding to a third subcarrier that is used for receiving a third signal in a third period; and the device further comprises:
a receiving module (1130), configured to receive the third signal at the third frequency determined by the determining module (1110).

9. The device according to claim 7 or 8, wherein the first frequency is a subset of a first frequency set corresponding to the first subcarrier-frequency mapping manner, the second frequency is a subset of a second frequency set corresponding to the second subcarrier-frequency mapping manner, and the first frequency set does not overlap with the second frequency set.

10. The device according to any one of claims 7 to 9, wherein the first signal and the second signal are both reference signals;
the determining module (1110) is further configured to determine, according to a first reference signal-resource element mapping manner, a first resource element corresponding to the first signal in the first period, and determine, according to a second reference signal-resource element mapping manner, a second resource element corresponding to the second signal in the second period, wherein either resource element is uniquely determined by one symbol in a time domain and one subcarrier in a frequency domain; and
before sending the first signal, the sending module (1120) is further configured to map the first signal into the first resource element determined by the determining module; before sending the second signal, the sending module is further configured to map the second signal into the second resource element determined by the determining module (1110).

11. The device according to any one of claims 7 to 9, wherein the first signal and the second signal are both control signals;
the determining module (1110) is further configured to determine a first resource and a second resource, wherein the first resource and the second resource are time-frequency resources or orthogonal code resources, and the first resource is different from the second resource; and
before sending the first signal, the sending module (1120) is further configured to map the first signal into a subcarrier corresponding to the first resource determined by the determining module (1110); before sending the second signal, the sending module (1120) is further configured to map the second control signal into a subcarrier corresponding to the second resource determined by the determining module (1110).

12. The device according to any one of claims 7 to 11, wherein the sending module (1120) module is further configured to:
send type indication information to a network device, wherein the type indication information includes interference cancellation capability identifier information of the device.

13. Computer program product comprising instructions which, when executed by a computer device, cause the computer device to perform the steps of the method of any of claims 1 to 6.

## Patentansprüche

1. Signalübertragungsverfahren, umfassend:
Bestimmen, durch eine erste Vorrichtung gemäß einer ersten Unterträgerfrequenzabbildungsweise, einer ersten Frequenz entsprechend einem ersten Unterträger, die zum Abbilden eines ersten Signals in einem ersten Zeitraum verwendet wird, und Senden des ersten Signals bei der ersten Frequenz, wobei die erste Unterträgerfrequenzabbildungsweise eine Uplink-Unterträgerfrequenzabbildungsweise ist; und
Bestimmen, durch die erste Vorrichtung gemäß einer zweiten Unterträgerfrequenzabbildungsweise, einer zweiten Frequenz entsprechend einem zweiten Unterträger, die zum Abbilden eines zweiten Signals in einem zweiten Zeitraum verwendet wird, und Senden des zweiten Signals bei der zweiten Frequenz, wobei die zweite Unterträgerfrequenzabbildungsweise eine Downlink-Unterträgerfrequenzabbildungsweise ist, wobei:
die erste Unterträgerfrequenzabbildungsweise von der zweiten Unterträgerfrequenzabbildungsweise verschieden ist, die erste Frequenz und die zweite Frequenz zu einem gleichen Frequenzband gehören und der zweite Zeitraum ein oder mehrere Übertragungszeitintervalle außer einem Übertragungszeitintervall, das zum Übertragen eines physischen Rundsendesignals verwendet wird, und einem Übertragungszeitintervall, das zum Umschalten einer Downlink-Übertragung in eine Uplink-Übertragung verwendet wird, umfasst, wobei
Unterträger in der ersten Unterträgerfrequenzabbildungsweise und in der zweiten Unterträgerfrequenzabbildungsweise von einer Unterträgerfrequenzbreite Δf sind und die Unterträger in der ersten Unterträgerfrequenzabbildungsbeziehung von den Unterträgern in der zweiten Unterträgerfrequenzabbildungsbeziehung um (N+1/2) Δf versetzt sind, wobei N eine Ganzzahl ist.

2. Verfahren nach Anspruch 1, ferner umfassend:
Bestimmen, durch die erste Vorrichtung gemäß der zweiten Unterträgerfrequenzabbildungsweise, einer dritten Frequenz entsprechend einem dritten Unterträger, die zum Empfangen eines dritten Signals in einem dritten Zeitraum verwendet wird, und Empfangen des dritten Signals bei der dritten Frequenz.

3. Verfahren nach Anspruch 1 oder 2, wobei die erste Frequenz ein Teilsatz eines ersten Frequenzsatzes entsprechend der ersten Unterträgerfrequenzabbildungsweise ist, die zweite Frequenz ein Teilsatz eines zweiten Frequenzsatzes entsprechend der zweiten Unterträgerfrequenzabbildungsweise ist und der erste Frequenzsatz nicht mit dem zweiten Frequenzsatz überlappt.

4. Verfahren nach einem der Ansprüche 1 bis 3, wobei das erste Signal und das zweite Signal beide Referenzsignale sind;
wobei das Verfahren ferner umfasst:
Bestimmen, durch die erste Vorrichtung gemäß einer ersten Referenzsignalressourcenelementabbildungsweise, eines ersten Ressourcenelements entsprechend dem ersten Signal im ersten Zeitraum und Bestimmen, gemäß einer zweiten Referenzsignalressourcenelementabbildungsweise, eines zweiten Ressourcenelements entsprechend dem zweiten Signal im zweiten Zeitraum;
wobei vor dem Senden, durch die erste Vorrichtung, des ersten Signals bei der ersten Frequenz das Verfahren ferner umfasst:
Abbilden, durch die erste Vorrichtung, des ersten Signals in das erste Ressourcenelement; und
wobei vor dem Senden, durch die erste Vorrichtung, des zweiten Signals bei der zweiten Frequenz das Verfahren ferner umfasst:
Abbilden, durch die erste Vorrichtung, des zweiten Signals in das zweite Ressourcenelement, wobei:
jedes Ressourcenelement durch ein Symbol in einem Zeitbereich und einen Unterträger in einem Frequenzbereich eindeutig bestimmt wird.

5. Verfahren nach einem der Ansprüche 1 bis 3, wobei das erste Signal und das zweite Signal beide Steuersignale sind;
wobei vor dem Senden, durch die erste Vorrichtung, des ersten Signals bei der ersten Frequenz das Verfahren ferner umfasst:
Abbilden, durch die erste Vorrichtung, des ersten Signals in einen Unterträger entsprechend einer bestimmten ersten Ressource; und
wobei vor dem Senden, durch die erste Vorrichtung, des zweiten Signals bei der zweiten Frequenz das Verfahren ferner umfasst:
Abbilden, durch die erste Vorrichtung, des zweiten Signals in einen Unterträger entsprechend einer bestimmten zweiten Ressource, wobei:
die erste Ressource und die zweite Ressource Zeit-Frequenz-Ressourcen oder Ressourcen eines orthogonalen Codes sind und die erste Ressource von der zweiten Ressource verschieden ist.

6. Verfahren nach einem der Ansprüche 1 bis 5, ferner umfassend:
Senden, durch die erste Vorrichtung, von Typangabeinformationen an eine Netzwerkvorrichtung, wobei die Typangabeinformationen Interferenzunterdrückungsfähigkeitsidentifikatorinformationen der ersten Vorrichtung einschließen.

7. Signalübertragungsvorrichtung, umfassend:
ein Bestimmungsmodul (1110), das zum Bestimmen, gemäß einer ersten Unterträgerfrequenzabbildungsweise, einer ersten Frequenz entsprechend einem ersten Unterträger, die zum Abbilden eines ersten Signals in einem ersten Zeitraum verwendet wird, wobei die erste Unterträgerfrequenzabbildungsweise eine Uplink-Unterträgerfrequenzabbildungsweise ist, und Bestimmen, gemäß einer zweiten Unterträgerfrequenzabbildungsweise, einer zweiten Frequenz entsprechend einem zweiten Unterträger, die zum Abbilden eines zweiten Signals in einem zweiten Zeitraum verwendet wird, wobei die zweite Unterträgerfrequenzabbildungsweise eine Downlink-Unterträgerfrequenzabbildungsweise ist, ausgelegt ist; und
ein Sendemodul (1120), das zum Senden des ersten Signals bei der ersten Frequenz, die durch das Bestimmungsmodul (1110) bestimmt wird, und Senden des zweiten Signals bei der zweiten Frequenz, die durch das Bestimmungsmodul (1110) bestimmt wird, ausgelegt ist, wobei:
die erste Unterträgerfrequenzabbildungsweise von der zweiten Unterträgerfrequenzabbildungsweise verschieden ist, die erste Frequenz und die zweite Frequenz zu einem gleichen Frequenzband gehören und der zweite Zeitraum ein oder mehrere Übertragungszeitintervalle außer einem Übertragungszeitintervall, das zum Übertragen eines physischen Rundsendesignals verwendet wird, und einem Übertragungszeitintervall, das zum Umschalten einer Downlink-Übertragung in eine Uplink-Übertragung verwendet wird, umfasst,
wobei Unterträger in der ersten Unterträgerfrequenzabbildungsweise und in der zweiten Unterträgerfrequenzabbildungsweise von einer Unterträgerfrequenzbreite Δf sind und die Unterträger in der ersten Unterträgerfrequenzabbildungsbeziehung von den Unterträgern in der zweiten Unterträgerfrequenzabbildungsbeziehung um (N+1/2) Δf versetzt sind, wobei N eine Ganzzahl ist.

8. Vorrichtung nach Anspruch 7, wobei das Bestimmungsmodul (1110) ferner zum Bestimmen, gemäß der zweiten Unterträgerfrequenzabbildungsweise, einer dritten Frequenz entsprechend einem dritten Unterträger, die zum Empfangen eines dritten Signals in einem dritten Zeitraum verwendet wird, ausgelegt ist und die Vorrichtung ferner umfasst:
ein Empfangsmodul (1130), das zum Empfangen des dritten Signals bei der dritten Frequenz, die durch das Bestimmungsmodul (1110) bestimmt wird, ausgelegt ist.

9. Vorrichtung nach Anspruch 7 oder 8, wobei die erste Frequenz ein Teilsatz eines ersten Frequenzsatzes entsprechend der ersten Unterträgerfrequenzabbildungsweise ist, die zweite Frequenz ein Teilsatz eines zweiten Frequenzsatzes entsprechend der zweiten Unterträgerfrequenzabbildungsweise ist und der erste Frequenzsatz nicht mit dem zweiten Frequenzsatz überlappt.

10. Vorrichtung nach einem der Ansprüche 7 bis 9, wobei das erste Signal und das zweite Signal beide Referenzsignale sind;
das Bestimmungsmodul (1110) ferner zum Bestimmen, gemäß einer ersten Referenzsignalressourcenelementabbildungsweise, eines ersten Ressourcenelements entsprechend dem ersten Signal im ersten Zeitraum und Bestimmen, gemäß einer zweiten Referenzsignalressourcenelementabbildungsweise, eines zweiten Ressourcenelements entsprechend dem zweiten Signal im zweiten Zeitraum ausgelegt ist, wobei jedes Ressourcenelement durch ein Symbol in einem Zeitbereich und einen Unterträger in einem Frequenzbereich eindeutig bestimmt wird; und
vor dem Senden des ersten Signals, das Sendemodul (1120) ferner zum Abbilden des ersten Signals in das erste Ressourcenelement, das durch das Bestimmungsmodul bestimmt wird, ausgelegt ist; vor dem Senden des zweiten Signals, das Sendemodul ferner zum Abbilden des zweiten Signals in das zweite Ressourcenelement, das durch das Bestimmungsmodul (1110) bestimmt wird, ausgelegt ist.

11. Vorrichtung nach einem der Ansprüche 7 bis 9, wobei das erste Signal und das zweite Signal beide Steuersignale sind;
das Bestimmungsmodul (1110) ferner zum Bestimmen einer ersten Ressource und einer zweiten Ressource ausgelegt ist, wobei die erste Ressource und die zweite Ressource Zeit-Frequenz-Ressourcen oder Ressourcen eines orthogonalen Codes sind und die erste Ressource von der zweiten Ressource verschieden ist; und
vor dem Senden des ersten Signals, das Sendemodul (1120) ferner zum Abbilden des ersten Signals in einen Unterträger entsprechend der ersten Ressource, die durch das Bestimmungsmodul (1110) bestimmt wird, ausgelegt ist; vor dem Senden des zweiten Signals, das Sendemodul (1120) ferner zum Abbilden des zweiten Steuersignals in einen Unterträger entsprechend der zweiten Ressource, die durch das Bestimmungsmodul (1110) bestimmt wird, ausgelegt ist.

12. Vorrichtung nach einem der Ansprüche 7 bis 11, wobei das Sendemodul (1120) ferner ausgelegt ist zum:
Senden von Typangabeinformationen an eine Netzwerkvorrichtung, wobei die Typangabeinformationen Interferenzunterdrückungsfähigkeitsidentifikatorinformationen der Vorrichtung einschließen.

13. Computerprogrammprodukt, umfassend Anweisungen, die bei Ausführung durch eine Computervorrichtung die Computervorrichtung dazu veranlassen, die Schritte des Verfahrens nach einem der Ansprüche 1 bis 6 durchzuführen.

## Revendications

1. Procédé de transmission de signaux, comprenant :
la détermination, par un premier dispositif conformément à un premier mode de mappage sous-porteuse-fréquence, d'une première fréquence correspondant à une première sous-porteuse qui est utilisée pour mapper un premier signal dans une première période, et l'envoi du premier signal à la première fréquence, le premier mode de mappage sous-porteuse-fréquence étant un mode de mappage sous-porteuse-fréquence de liaison montante ; et
la détermination, par le premier dispositif conformément à un second mode de mappage sous-porteuse-fréquence, d'une deuxième fréquence correspondant à une deuxième sous-porteuse qui est utilisée pour mapper un deuxième signal dans une deuxième période, et l'envoi du deuxième signal à la deuxième fréquence, le second mode de mappage sous-porteuse-fréquence étant un mode de mappage sous-porteuse-fréquence de liaison descendante, dans lequel :
le premier mode de mappage sous-porteuse-fréquence est différent du second mode de mappage sous-porteuse-fréquence, la première fréquence et la deuxième fréquence appartiennent à une même bande de fréquences, et la deuxième période comprend un ou plusieurs intervalles de temps de transmission, à l'exception d'un intervalle de temps de transmission utilisé pour émettre un signal de radiodiffusion physique et d'un intervalle de temps de transmission utilisé pour basculer une transmission de liaison descendante sur une transmission de liaison montante, dans lequel
des sous-porteuses du premier mode de mappage sous-porteuse-fréquence et du second mode de mappage sous-porteuse-fréquence sont d'une largeur de fréquence de sous-porteuse Δf, et les sous-porteuses dans la première relation de mappage sous-porteuse-fréquence sont décalées par rapport aux sous-porteuses dans la deuxième relation de mappage sous-porteuse-fréquence par (N + 1/2) Δf, N étant un entier.

2. Procédé selon la revendication 1, comprenant en outre :
la détermination, par le premier dispositif conformément au second mode de mappage sous-porteuse-fréquence, d'une troisième fréquence correspondant à une troisième sous-porteuse qui est utilisée pour recevoir un troisième signal dans une troisième période, et la réception du troisième signal à la troisième fréquence.

3. Procédé selon la revendication 1 ou 2, dans lequel la première fréquence est un sous-ensemble d'un premier ensemble de fréquences correspondant au premier mode de mappage sous-porteuse-fréquence, la deuxième fréquence est un sous-ensemble d'un second ensemble de fréquences correspondant au second mode de mappage sous-porteuse-fréquence, et le premier ensemble de fréquences ne chevauche pas le second ensemble de fréquences.

4. Procédé selon l'une quelconque des revendications 1 à 3, dans lequel le premier signal et le deuxième signal sont tous deux des signaux de référence ;
le procédé comprend en outre :
la détermination, par le premier dispositif conformément à un premier mode de mappage signal de référence-élément de ressource, d'un premier élément de ressource correspondant au premier signal de la première période, et la détermination, conformément à un second mode de mappage signal de référence-élément de ressource, d'un deuxième élément de ressource correspondant au deuxième signal de la deuxième période ;
avant l'envoi, par le premier dispositif, du premier signal à la première fréquence, le procédé comprend en outre :
le mappage, par le premier dispositif, du premier signal sur le premier élément de ressource ; et
avant l'envoi, par le premier dispositif, du deuxième signal à la deuxième fréquence, le procédé comprend en outre :
le mappage, par le premier dispositif, du deuxième signal sur le deuxième élément de ressource, dans lequel :
l'un ou l'autre élément de ressource est déterminé de manière unique par un symbole dans un domaine temporel et une sous-porteuse dans un domaine fréquentiel.

5. Procédé selon l'une quelconque des revendications 1 à 3, dans lequel le premier signal et le deuxième signal sont tous deux des signaux de commande ;
avant l'envoi, par le premier dispositif, du premier signal à la première fréquence, le procédé comprend en outre :
le mappage, par le premier dispositif, du premier signal sur une sous-porteuse correspondant à une première ressource déterminée ; et
avant l'envoi, par le premier dispositif, du deuxième signal à la deuxième fréquence, le procédé comprend en outre :
le mappage, par le premier dispositif, du deuxième signal sur une sous-porteuse correspondant à une deuxième ressource déterminée, dans lequel :
la première ressource et la deuxième ressource sont des ressources temps-fréquence ou des ressources de code orthogonal, et la première ressource est différente de la deuxième ressource.

6. Procédé selon l'une quelconque des revendications 1 à 5, comprenant en outre :
l'envoi, par le premier dispositif, d'informations d'indication de type à un dispositif réseau, les informations d'indication de type comportant des informations d'identification de capacité d'annulation d'interférence du premier dispositif.

7. Dispositif de transmission de signaux, comprenant :
un module de détermination (1110), configuré pour déterminer, conformément à un premier mode de mappage sous-porteuse-fréquence, une première fréquence correspondant à une première sous-porteuse qui est utilisée pour mapper un premier signal dans une première période, le premier mode de mappage sous-porteuse-fréquence étant un mode de mappage sous-porteuse-fréquence de liaison montante, et déterminer, conformément à un second mode de mappage sous-porteuse-fréquence, une deuxième fréquence correspondant à une deuxième sous-porteuse qui est utilisée pour mapper un deuxième signal dans une deuxième période, le second mode de mappage sous-porteuse-fréquence étant un mode de mappage sous-porteuse-fréquence de liaison descendante ; et un module d'envoi (1120), configuré pour envoyer le premier signal à la première fréquence déterminée par le module de détermination (1110), et envoyer le deuxième signal à la deuxième fréquence déterminée par le module de détermination (1110), dans lequel :
le premier mode de mappage sous-porteuse-fréquence est différent du second mode de mappage sous-porteuse-fréquence, la première fréquence et la deuxième fréquence appartiennent à une même bande de fréquences, et la deuxième période comprend un ou plusieurs intervalles de temps de transmission, à l'exception d'un intervalle de temps de transmission utilisé pour émettre un signal de radiodiffusion physique et d'un intervalle de temps de transmission utilisé pour basculer une transmission de liaison descendante sur une transmission de liaison montante,
dans lequel des sous-porteuses du premier mode de mappage sous-porteuse-fréquence et du second mode de mappage sous-porteuse-fréquence sont d'une largeur de fréquence de sous-porteuse Δf, et les sous-porteuses dans la première relation de mappage sous-porteuse-fréquence sont décalées par rapport aux sous-porteuses dans la deuxième relation de mappage sous-porteuse-fréquence par (N + 1/2) Δf, N étant un entier.

8. Dispositif selon la revendication 7, dans lequel le module de détermination (1110) est en outre configuré pour déterminer, conformément au second mode de mappage sous-porteuse-fréquence, une troisième fréquence correspondant à une troisième sous-porteuse qui est utilisée pour recevoir un troisième signal dans une troisième période ; et le dispositif comprend en outre :
un module de réception (1130), configuré pour recevoir le troisième signal à la troisième fréquence déterminée par le module de détermination (1110).

9. Dispositif selon la revendication 7 ou 8, dans lequel la première fréquence est un sous-ensemble d'un premier ensemble de fréquences correspondant au premier mode de mappage sous-porteuse-fréquence, la deuxième fréquence est un sous-ensemble d'un second ensemble de fréquences correspondant au second mode de mappage sous-porteuse-fréquence, et le premier ensemble de fréquences ne chevauche pas le second ensemble de fréquences.

10. Dispositif selon l'une quelconque des revendications 7 à 9, dans lequel le premier signal et le deuxième signal sont tous deux des signaux de référence ;
le module de détermination (1110) est en outre configuré pour déterminer, conformément à un premier mode de mappage signal de référence-élément de ressource, un premier élément de ressource correspondant au premier signal de la première période, et déterminer, conformément à un second mode de mappage signal de référence-élément de ressource, un deuxième élément de ressource correspondant au deuxième signal dans la deuxième période, dans lequel l'un ou l'autre élément de ressource est déterminé de manière unique par un symbole dans un domaine temporel et une sous-porteuse dans un domaine fréquentiel ; et
avant d'envoyer le premier signal, le module d'envoi (1120) est en outre configuré pour mapper le premier signal sur le premier élément de ressource déterminé par le module de détermination ; avant d'envoyer le deuxième signal, le module d'envoi est configuré pour mapper le deuxième signal sur le deuxième élément de ressource déterminé par le module de détermination (1110).

11. Dispositif selon l'une quelconque des revendications 7 à 9, dans lequel le premier signal et le deuxième signal sont tous deux des signaux de commande ;
le module de détermination (1110) est en outre configuré pour déterminer une première ressource et une deuxième ressource, la première ressource et la deuxième ressource étant des ressources de fréquence temporelle ou des ressources de code orthogonal, et la première ressource étant différente de la deuxième ressource ; et
avant d'envoyer le premier signal, le module d'envoi (1120) est en outre configuré pour mapper le premier signal sur une sous-porteuse correspondant à la première ressource déterminée par le module de détermination (1110) ; avant d'envoyer le deuxième signal, le module d'envoi (1120) est en outre configuré pour mapper le deuxième signal de commande sur une sous-porteuse correspondant à la deuxième ressource déterminée par le module de détermination (1110).

12. Dispositif selon l'une quelconque des revendications 7 à 11, dans lequel le module d'envoi (1120) est en outre configuré pour :
envoyer des informations d'indication de type à un dispositif réseau, les informations d'indication de type comportant des informations d'identifiant de capacité d'annulation d'interférence du dispositif.

13. Produit de programme d'ordinateur comprenant des instructions qui, à leur exécution par un dispositif informatique, amènent le dispositif informatique à réaliser les étapes du procédé selon l'une quelconque des revendications 1 à 6.
